Europäisches Patentamt

European Patent Office

Office européen des brevets

(19)

(11) **EP 1 696 382 A1**

(12) **EUROPEAN PATENT APPLICATION**
published in accordance with Art. 158(3) EPC

(43) Date of publication:
**30.08.2006 Bulletin 2006/35**

(51) Int Cl.:
***G06T 1/00*** (2006.01)

(21) Application number: **04807308.4**

(22) Date of filing: **17.12.2004**

(86) International application number:
**PCT/JP2004/018951**

(87) International publication number:
**WO 2005/059828 (30.06.2005 Gazette 2005/26)**

(84) Designated Contracting States:
**DE FR GB**

(30) Priority: **19.12.2003 JP 2003423297
19.12.2003 JP 2003423298**

(71) Applicant: **Matsushita Electric Industries Co., Ltd.
Kadoma-shi,
Osaka 571-8501 (JP)**

(72) Inventor: **WAKIYAMA, Koji
c/o Mat.Elec.Ind.Co.,Ltd.
Osaka-shi, Osaka 540-6319 (JP)**

(74) Representative: **Pautex Schneider, Nicole
Véronique
Novagraaf International SA
25, Avenue du Pailly
1220 Les Avanchets - Geneva (CH)**

(54) **IRIS IMAGE PICKUP CAMERA AND IRIS AUTHENTICATION SYSTEM**

(57) An imaging optical system 110 of an iris image pickup camera 100 has a common light axis in a region where an iris as an object is situated, and has first and second branch light axes branched from the common light axes. The imaging optical system 110 further has focusing ranges displaced from each other on the common axis for each of first and second branch light paths which passes through each of the first and second branch light axes. An imaging element 12 and an image processing section 13 generate image data of an iris image formed through the first and second branch light paths. Thus, an iris image pickup camera can be provided, which can promptly take an iris image for iris authentication in a simple configuration and without bothering a person to be authenticated.

FIG. 1

**Description**

Technical Field

The present invention relates to an iris image pickup camera that takes an iris image of a person for authentication of an iris, and particularly relates to an iris image pickup camera for taking an object image with a high focusing level.

Background Art

An iris authentication system is a system that performs authentication of an iris by generating image data of an iris image by taking an iris image of a person using an iris image pickup camera, and determining whether the iris image is corresponding to an iris image of a person that has been registered or not using the image data of the iris image.

For example, the iris authentication system is used for an in/out room management system. In the in/out room management system, an iris image pickup camera is set near a door, and a person to be authenticated is subjected to imaging of an iris by the iris image pickup camera when the person goes in or out of the room. The in/out room management system extracts a portion of the iris from image data obtained by taking the iris image, and performs authentication by comparing the iris image with an iris image of a registrant that has been stored. When the person to be authenticated is authenticated as the registrant, the in/out room management system unlocks or locks a door.

As a camera for use in the iris authentication system, an iris image pickup camera having an automatic focusing function or an automatic zoom function is known. The iris image pickup camera has a lens group including a zoom lens and a focusing lens and a lens drive mechanism for changing arrangement of the lens group. The iris image of the person to be authenticated is taken in such a way that the lens drive mechanism is actuated by a control circuit, thereby the iris of the person is focused, and an image of the iris portion has a predetermined size (for example, refer to JP-A-2002-94865).

As above, the iris image pickup camera in the related art is configured in a way that it has the automatic focusing function and the automatic zoom function, and takes the iris image in which the iris is focused, and the image of the iris portion has the predetermined size.

As an iris image pickup camera that takes an iris image with a high focusing level without using the automatic focusing function, an iris image pickup camera is known, which has lead guidance capability that measures a distance to the person to be authenticated, and leads a person to be imaged such that the iris is situated in a focusing position based on difference between a distance to the focusing position and a distance to the person (for example, refer to JP-A-2003-141517).

Disclosure of the Invention

However, in the iris image pickup camera having the automatic focusing function and the automatic zoom function in the related art, there has been a difficulty that the zoom lens, lens drive mechanism and control circuit for controlling the mechanism are necessary, which makes a mechanism and a circuit to be complicated. Moreover, in the case of taking an iris image promptly, there has been a difficulty that much time is required for focusing by the automatic focusing function and for adjusting size of the iris image by the automatic zoom function.

Moreover, even in the iris image pickup camera having the lead guidance capability in the related art, there has been a difficulty that a ranging sensor for measuring the distance to the person to be imaged is necessary for leading the person, which makes the circuit to be complicated similarly as above.

The invention, which was made to solve the difficulties in the related art, aims to provide an iris image pickup camera that can promptly take an iris image in focus for iris authentication without the mechanism and the circuit being complicated.

The iris image pickup camera of the invention includes imaging optical means that has a common light axis in a region where the iris is situated, and a plurality of branch light axes branched from the common light axis, and has a plurality of focusing ranges different from one another on the common light axis for each of a plurality of branch light paths, and imaging means for taking image data of a plurality of iris images formed through the plurality of branch light paths.

According to such a configuration, the imaging optical means has the focusing ranges different from one another on the common light axis, and if the iris is situated in one of the plurality of focusing ranges, a focused iris image can be obtained, therefore an iris image pickup camera can be provided, which promptly provides an iris image in focus in a wide range of a distance to the iris in a simple configuration without having the automatic zoom function or the automatic focusing function.

In the iris image pickup camera of the invention, the imaging optical means is configured such that the plurality of focusing ranges are adjacent to one another, and when the iris is situated in all regions of the plurality of focusing ranges, an iris image having a size suitable for iris authentication is obtained.

According to the configuration, the imaging optical means is configured such that the plurality of focusing ranges are adjacent to one another, and when the iris is situated in all the regions of the plurality of focusing ranges, the iris image having the size suitable for iris authentication is obtained, therefore an image that is in focus in all the regions of the plurality of focusing ranges and has the size suitable for iris authentication can be promptly obtained. The case that the plurality of the focusing ranges are adjacent to one another includes a case that the plurality of focusing ranges are displaced from each together with overlapped areas, a case that they are continued, and a case that they are separated from each together with a slight gap.

In the iris image pickup camera of the invention, the imaging optical means has a junction of the branch light axes where the plurality of branch light axes join together, and the imaging means has an imaging element that takes image data of an iris image formed through the plurality of branch light paths in the junction of the branch light axes.

According to the configuration, since the plurality of branch light axes join together on this side of the imaging element, the imaging element need not be provided for each of the plurality of branch light paths.

Moreover, the iris image pickup camera of the invention includes shield means for selectively shielding the plurality of branch light paths.

According to the configuration, since the shield means selectively shields the plurality of branch light paths, the iris image is formed through a branch light path other than a branch light path shielded by the shield means, and the image data of the iris image are taken by the imaging means.

Moreover, the iris image pickup camera of the invention includes a mirror which is held in a manner that a direction of a reflective surface can be changed, and forms an iris image through one of the plurality of branch light paths by changing the direction of the reflective surface.

According to the configuration, since the iris image is formed through one of the branch light paths by changing the direction of the reflective surface, the iris image can be formed by selectively using one of the plurality of branch light paths.

Moreover, in the iris image pickup camera of the invention, the imaging means has a plurality of imaging elements that are disposed on the plurality of branch light axes, and take image data of a plurality of iris images formed through the plurality of branch light paths.

According to the configuration, since the imaging elements are provided on the plurality of branch light axes respectively, image data of the iris image formed through each of the branch light paths can be obtained for each of the imaging elements.

Moreover, in the iris image pickup camera of the invention, the imaging means has an imaging element that takes image data of the plurality of iris images formed through the plurality of branch light paths, and the imaging optical means is configured such that the plurality of iris images are projected to different regions in the imaging element.

According to the configuration, since an iris image formed through each of the plurality of branch light paths is included in one of the regions of the image data, an iris image in focus can be obtained from one of the regions of the image data.

Furthermore, an iris imaging system of the invention includes iris authentication means that performs authentication of an iris using the iris image pickup camera and the image data of the iris image.

According to the configuration, image data of a clear iris image in focus can be promptly obtained, and thus authentication of an iris can be performed more accurately by the iris authentication means.

The camera of the invention includes image acquisition means that acquires object images taken in a plurality of imaging modes having different focusing level characteristics to an object, and distance determination means that determines a distance to the object based on difference in focusing level between the object images taken in the plurality of imaging modes.

According to the configuration, since the distance to the object is determined based on difference in focusing level between the object images taken in the plurality of imaging modes having different focusing level characteristics, an object image with a high focusing level can be taken using the determined distance.

Moreover, the camera of the invention includes imaging optical means that has a common light axis in a region where the object is situated, and has a plurality of branch light axes branched from the common light axis, and has a plurality of focusing ranges different from one another on the common axis for each of branch light paths of the plurality of branch light axes. The plurality of imaging modes are imaging modes in which an object image is formed through the plurality of branch light paths, so that the object image is taken.

According to the configuration, since the imaging optical means has the focusing ranges different from one another on the common axis, as long as the object is situated in one of the plurality of focusing ranges, an object image in focus can be obtained, and an object image in focus can be obtained in a wide range of the distance to the object.

Moreover, the iris image pickup camera of the invention includes iris image acquisition means that acquires iris images taken in a plurality of imaging modes having different focusing level characteristics to an iris, and lead means that leads a person to be imaged such that the iris is in at least one of the plurality of focusing ranges, each of which is corresponding to each of the focusing level characteristics of the plurality of imaging modes, based on difference in focusing level between the iris images acquired in the plurality of imaging modes.

According to the configuration, since the person to be imaged is led such that the iris is in at least one of the plurality of focusing ranges based on the difference in focusing level between the plurality of iris images acquired in the plurality of imaging modes having the different focusing level characteristics to the iris, an iris image with the high focusing level can be obtained.

Furthermore, in the iris image pickup camera of the invention, the plurality of focusing ranges are adjacently displaced in a back and forth direction. When a focusing level of a first iris image taken in an imaging mode corresponding to a focusing range on this side of the relevant device, which is an area where the iris is not situated in any of the plurality of focusing ranges, is higher than a focusing level of a second iris image taken in an imaging mode corresponding to a focusing range at a back side, the leading means leads the person to be imaged to be distanced from the device, and when the focusing level of the second iris image is higher than the focusing level of the first iris image, it leads the person to be closer to the device.

According to the configuration, the person to be imaged is led to be distanced from or closer to the device based on difference in focusing level between the plurality of iris images taken in the plurality of imaging modes, and consequently the person can be led to be in at least one of the plurality of focusing ranges. The plurality of focusing ranges adjacently displaced in the back and forth direction may be overlapped or may not be overlapped with one another.

Furthermore, in the iris image pickup camera of the invention, the lead means leads the person to be imaged using at least one of display and voice.

According to the configuration, the person to be imaged can be led by lead guidance using at least one of display and voice.

Brief Description of the Drawings

Fig. 1 is a block diagram of an iris authentication system of a first embodiment of the invention;
Fig. 2 is a view for illustrating a level of displacement between focusing ranges in the first embodiment of the invention;
Fig. 3A is a view for illustrating image magnification of an iris image in the first embodiment of the invention;
Fig. 3B is a view showing an iris image when an iris is situated in the most distant end of a focusing range in the first embodiment of the invention;
Fig. 3C is a view showing an iris image when the iris is situated in the nearest end of the focusing range in the first embodiment of the invention;
Fig. 4 is a flowchart for illustrating operation of the iris authentication system of the first embodiment of the invention;
Fig. 5 is a block diagram of an iris authentication system of a second embodiment of the invention;
Fig. 6 is another block diagram of the iris authentication system of the second embodiment of the invention;
Fig. 7 is a flowchart for illustrating operation of the iris authentication system of the second embodiment of the invention;
Fig. 8 is a block diagram of an iris authentication system of a third embodiment of the invention;
Fig. 9 is a flowchart for illustrating operation of the iris authentication system of the third embodiment of the invention;
Fig. 10 is a block diagram of an iris authentication system of a fourth embodiment of the invention;
Fig. 11 is a flowchart for illustrating operation of the iris authentication system of the fourth embodiment of the invention;
Fig. 12 is a block diagram of an iris authentication system of a fifth embodiment of the invention;
Fig. 13 is a view showing image data generated in the iris authentication system of the fifth embodiment of the invention;
Fig. 14 is a flowchart for illustrating operation of the iris authentication system of the fifth embodiment of the invention;
Fig. 15 is a block diagram of an iris authentication device of a sixth embodiment of the invention;
Fig. 16 is a block diagram of an iris authentication system of a seventh embodiment of the invention;
Fig. 17 is a view showing focusing level characteristics of first and second imaging modes in the seventh embodiment of the invention;
Fig. 18 is a block diagram of a lead guidance section in the seventh embodiment of the invention;
Fig. 19 is a flowchart for illustrating operation of the iris authentication system of the seventh embodiment of the invention;
Fig. 20 is a block diagram of an iris authentication system of an eighth embodiment of the invention;
Fig. 21 is another block diagram of the iris authentication system of the eighth embodiment of the invention;
Fig. 22 is a block diagram of an iris authentication system of a ninth embodiment of the invention;
Fig. 23 is a flowchart for illustrating operation of the iris authentication system of the ninth embodiment of the invention;

Fig. 24 is a block diagram of an iris authentication system of a tenth embodiment of the invention;
Fig. 25 is a block diagram of an iris authentication system of an eleventh embodiment of the invention; and
Fig. 26 is a flowchart for illustrating operation of the iris authentication system of the eleventh embodiment of the invention.

Best Mode for Carrying Out the Invention

Hereinafter, an iris image pickup camera of an embodiment of the invention and an iris authentication system having the camera will be described using drawings.

(First Embodiment)

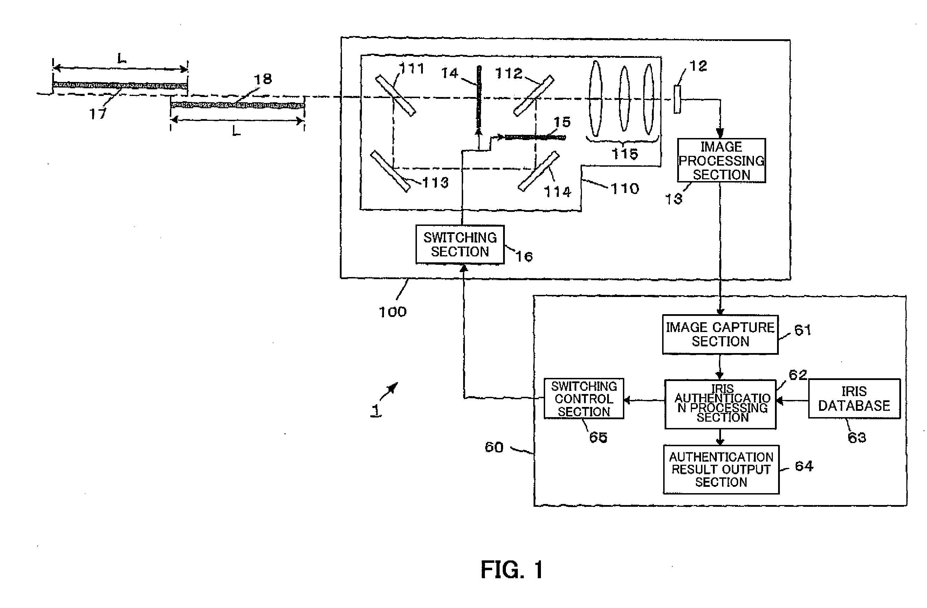

An iris authentication system of a first embodiment of the invention is shown in Fig. 1. In Fig. 1, an iris authentication system 1 includes an iris image pickup camera 100 and an iris authentication device 60. The iris authentication camera 100 includes an imaging optical system 110, an imaging element 12, an image processing section 13, shielding plates 14 and 15, and a switching section 16. The imaging optical system 110 is configured by two half mirrors 111 and 112, two mirrors 113 and 114, and a lens group 115. The lens group 115 is a group of fixed focal length lenses in which each lens is fixed. The lens group 115 has a focusing range having a depth of L.
The half mirrors 111, 112 are disposed on an extension of a light axis of the lens group 115. The half mirror 111 is held in such a direction that part of injected light from an object side is reflected downward, and the half mirror 112 is held in such a direction that part of injected light from a lower side is reflected to the lens group 115.
The mirror 113 is disposed in a position where the reflected light from the half mirror 111 is injected, that is, below the half mirror 111, and held in such a direction that the reflected light from the half mirror 111 is reflected in a direction parallel to the light axis of the lens group 115. The mirror 114 is disposed in a position where light reflected by the half mirror 111 and the mirror 113 is injected, that is, in a position in the same height as that of the mirror 113, and held in such a direction that reflected light from the mirror 113 is reflected upward.
In a configuration as above, in the imaging optical system 110, the half mirror 111, half mirror 112 and lens group 115 configure a first branch optical system, and the half mirror 111, mirror 113, mirror 114, half mirror 112 and lens group 115 configure a second branch optical system. Hereinafter, light axes of first and second branch optical systems are called first and second branch light axes. The imaging optical system 110 has a common light axis in a region where an object is present, that is, in the outside of the iris image pickup camera 1, and the common light axis is branched into first and second branch light axes at the half mirror 111 as a branch point. The first and second branch light axes join together at the half mirror 112 as a junction (junction of the branch light axes). Hereinafter, light paths along the first and second branch light axes are called first and second branch light paths.
The first branch optical system is configured such that light from an iris situated on the common light axis is focused on an imaging surface of the imaging element 12 through the first branch light path along which the light is transmitted through the half mirror 111 and the half mirror 112, and then injected into the lens group 115. The second branch optical system is configured such that the light from the iris situated on the common light axis is focused on the imaging surface of the imaging element 12 through the second branch light path along which the light is reflected by the half mirror 111, mirror 113, mirror 114, and half mirror 112 in turn, and then injected into the lens group 115.
In this way, since the first and second branch light paths are different in length, a focusing range 17 in the case that light from the iris as an object passes through the first branch light path, and a focusing range 18 in the case that light from the iris passes through the second branch light path are displaced from each other on the common light axis.

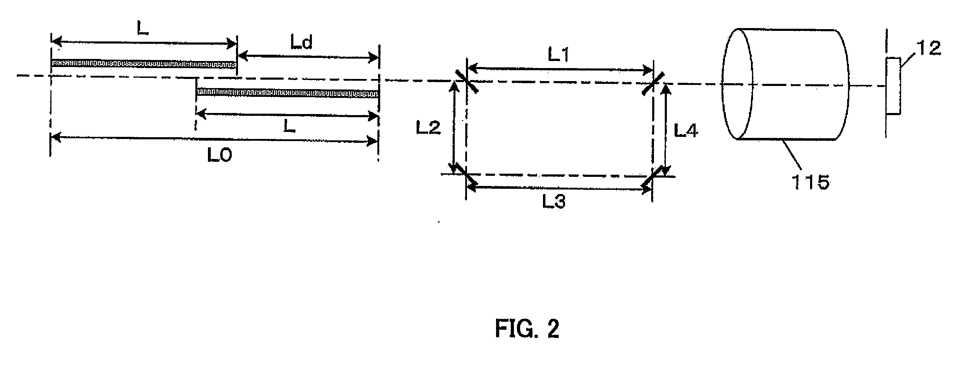

Fig. 2 is a view for illustrating a level of displacement between the focusing ranges. When it is assumed that a distance from the half mirror 111 to the half mirror 112 is L1, a distance from the half mirror 111 to the mirror 113 is L2, a distance from the mirror 113 to the mirror 114 is L3, and a distance from the mirror 114 to the half mirror 112 is L4, difference Ld in light path length between the first and second branch light paths is given by,

$$Ld=(L2+L3+L4)-L1.$$

The difference Ld is the level of displacement on the common light axis between the focusing range 17 of the first branch light path and the focusing range 18 of the second branch light path.
In the embodiment, the first and second branch optical systems are configured such that the difference Ld in light path length is smaller than depth L of each of the focusing ranges. Therefore, the two focusing ranges are overlapped with each other by a length of (L-Ld). Thus, depth L0 of an expanded focusing range combining the focusing range 17 of the first branch light path and the focusing range 18 of the second branch light path is given by,

$$L0 = L + Ld = L + L2 + L3 + L4 - L1.$$

Therefore, if the iris as the object is situated within the expanded focusing range having a depth of L0, an iris image that has been focused through at least one of the light paths is formed on the imaging surface of the imaging element 12.

Moreover, in the embodiment, the depth L of the focusing range is set such that an iris image within the range has a predetermined size suitable for iris authentication.

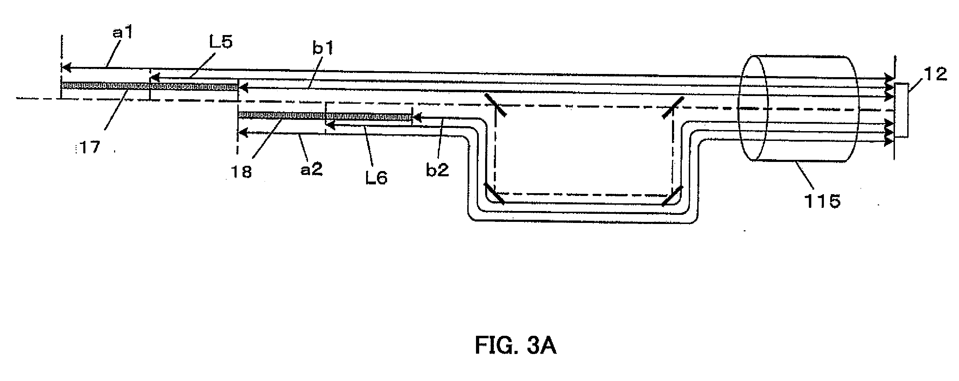

Figs. 3A to 3C are views for illustrating image magnification (image size) of an iris image formed by the lens group 115. As shown in Fig. 3A, L5, L6, a1, a2, b1 and b2 are defined as follows.

L5: an imaging distance from the imaging surface to the center of the focusing range 17 of the first branch light path;

L6: an imaging distance from the imaging surface to the center of the focusing range 18 of the second branch light path;

a1: an imaging distance from the imaging surface to the most distant end of the focusing range 17 of the first branch light path;

a2: an imaging distance from the imaging surface to the most distant end of the focusing range 18 of the second branch light path;

b1: an imaging distance from the imaging surface to the nearest end of the focusing range 17 of the first branch light path; and

b2: an imaging distance from the imaging surface to the nearest end of the focusing range 18 of the second branch light path.

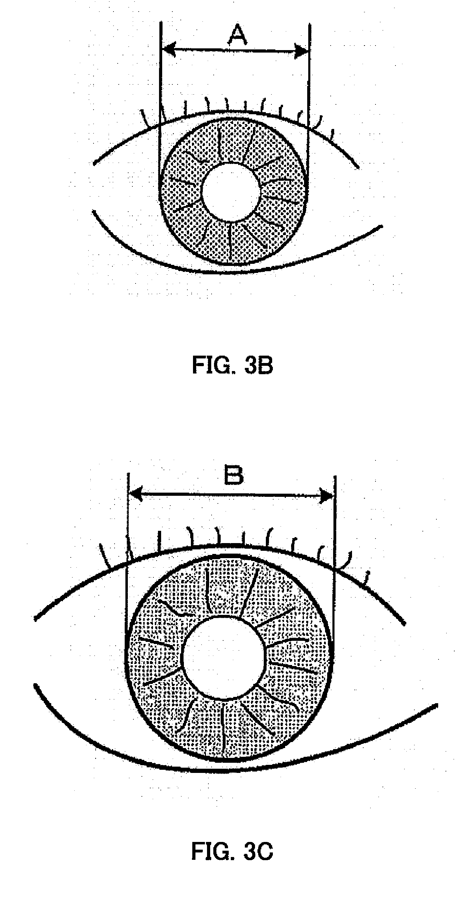

When the iris as the object is situated in the imaging distance a1 from the imaging surface, if size of the iris image formed on the imaging surface through the first branch light path is assumed to be A (refer to Fig. 3B), when the iris is situated at the imaging distance L5 from the imaging surface, the size of the iris image formed on the imaging surface through the first branch light path is given by $A \times (a1/L5)$, and when the iris is situated at the imaging distance b1 from the imaging surface, the size B of the iris image formed on the imaging surface through the first branch light path is given by $B = A \times (a1/b1)$. (refer to Fig.3C.)

In this way, when size of the iris image of the iris in the most distant end of the focusing range 17 of the first branch light path is used as reference, the size of the iris image ranges from the same size as the reference size to a1/b1 times as large as the reference size within the focusing range 17 of the first branch light path. The a1 and b1 are set such that the size of the iris image is suitable for authentication processing as described later. These values are set in design of the lens group 115.

In the embodiment, since a lens is not included in the first and second branch light paths, the imaging distance L5 from the imaging surface to the center of the focusing range 17 of the first branch light path and the imaging distance L6 from the imaging surface to the center of the focusing range 18 of the second branch light path, the imaging distance a1 from the imaging surface to the most distant end of the focusing range 17 of the first branch light path and the imaging distance a2 from the imaging surface to the most distant end of the focusing range 18 of the second branch light path, and the imaging distance b1 from the imaging surface to the nearest end of the focusing range 17 of the first branch light path and the imaging distance b2 from the imaging surface to the nearest end of the focusing range 18 of the second branch light path are the same, respectively. That is, L5=L6, a1=a2, and b1=b2 are given.

Therefore, when the size of the iris image formed on the imaging surface through the first branch light path is assumed to be A (refer to Fig. 3B); in the case that the iris is situated at an imaging distance a2 from the imaging surface, the size of the iris image formed on the imaging surface through the second branch light path is A; in the case that the iris is situated at an imaging distance L6 from the imaging surface, the size of the iris image formed on the imaging surface through the second branch light path is $A \times (a2/L6) = A \times (a1/L5)$ ; and in the case that the iris is situated at an imaging distance b2 from the imaging surface, the size of the iris image formed on the imaging surface through the second branch light path is $A \times (a2/b2) = A \times (a1/b1) = B$.

Therefore, in design of the lens group 115, if a1 and b1 are set such that size of A and B are suitable for iris authentication for the focusing range of the first branch light path, even if the iris is situated in the focusing range of the second branch light path, light from the iris is focused through the second branch light path, thereby an iris image having a size suitable for iris authentication can be obtained.

Return to Fig. 1, the shielding plate 14 is disposed on the first branch light axis, and the shielding plate 15 is disposed on the second branch light axis. The shielding plates 14, 15 are driven by a not-shown drive mechanism, and move between a position at which the branch light path is shielded (shielding position) and a position at which the branch light path is not shielded (withdrawal position). The switching section 16 operate to control movement of the shielding plates 14 and 15 according to a switching control signal from a switching control section 65 of an iris authentication device 60 described later. The switching section 16 controls movement of the two shielding plates such that when one of the shielding plates 14 and 15 is in the shielding position, the other is in the withdrawal position, that is, only one of the shielding plates shields the branch light path.

The imaging element 12 is configured by a solid-state imaging element that converts the iris image formed by the lens group 115 into an electric signal. The image processing section 13 operates to perform processing such as A/D conversion to an electric signal outputted from the imaging element 12, and generating image data of the iris image.

The iris authentication device 60 of the iris authentication system 1 includes an image capture section 61, an iris authentication processing section 62, an iris database 63, an authentication result output section 64, and a switching control section 65. The image capture section 61 operates to load image data of an iris image generated in the iris image pickup camera 100 as image data for iris authentication, and to output the data to the iris authentication processing section 62. The iris database 63 stores image data of an iris image of a registrant.

The iris authentication processing section 62 operates to perform the iris authentication by extracting an iris portion included in the image data for iris authentication outputted from the image capture section 61 and to compare it with the iris image stored in the iris database 63, and to output a result of the authentication to the authentication result output section 64. The authentication result output section 64 outputs an authentication result signal (authentication success signal or authentication failure signal) according to the authentication result. For example, when the iris authentication system 1 is used for the in/out room management system, the authentication result signal is a control signal for unlocking or locking a door. When the iris authentication device 60 is added with an information device such as a monitor to notify the authentication result to a person to be authenticated, the authentication result signal is used as an information signal of the authentication result.

Moreover, the iris authentication processing section 62 has function that when the authentication result is given as authentication failure, the section outputs the result to the switching control section 65. The switching control section 65 operates to output a switching control signal for switching a light path to the switching section 16 of the iris image pickup camera 100 upon receiving the result of the authentication failure for the iris portion from the iris authentication processing section 62.

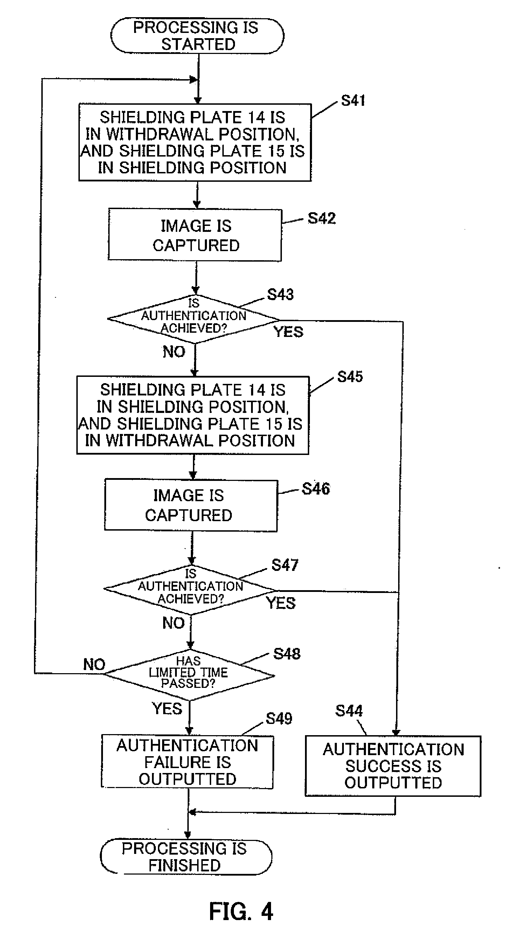

For the iris authentication system 1 configured as above, operation thereof is described using Fig. 4. First, the shielding plates 14 and 15 are moved by the switching section 16, so that the shielding plate 14 is set in the withdrawal position, and the shielding plate 15 is set in the shielding position (step S41). In this state, light from the iris as the object is transmitted through the half mirror 111, and furthermore transmitted through the half mirror 112, and then injected into the lens group 115, and then the iris image is formed and projected to the imaging surface of the imaging element 12. That is, the iris image is formed through the first branch optical path. Light reflected by the half mirror 111 is reflected by the mirrors 113 and 114 in turn, and then shielded by the shielding plate 15 and therefore does not reach the half mirror 112. The iris image formed through the first branch light path is converted into an electric signal by the imaging element 12, and then image data of the iris image are generated in the image processing section 13.

Next, the image capture section 61 of the iris authentication device 60 loads the image data generated in the image processing section 13 as image data for iris authentication, and outputs the data to the iris authentication processing section 62 (step S42). The iris authentication processing section 62 extracts an iris portion from the image data outputted from the image capture section 61, and then compares it with the iris image stored in the iris database 63, thereby performs authentication (step S43). Here, when the iris is within the focusing range 17 of the first branch light path, and the iris has been registered in the iris database 63, authentication is achieved. When authentication is achieved (YES in step S43), the iris authentication processing section 62 outputs a result of the authentication to the authentication result output section 64. The authentication result output section 64 outputs an authentication success signal according to the result of authentication success (step S44), and then processing is finished.

On the other hand, when authentication is not achieved (NO in step S43), the iris authentication processing section 62 outputs a result of authentication failure to the switching control section 65. The switching control section 65 outputs a switching control signal to the switching section 16 of the iris image pickup camera 100. Then, the shielding plates 14 and 15 are moved by the switching section 16, so that the shielding plate 14 is set in the shielding position, and the shielding plate 15 is set in the withdrawal position (step S45). In this state, light from the iris passes through the second branch light path, and consequently an iris image is formed on the imaging element 12. That is, the light from the iris is reflected by the half mirror 111, mirror 113, mirror 114 and mirror 112 in turn, and then injected into the lens group 115, and consequently the iris image is projected to the imaging surface of the imaging element 12. Then, the imaging element 12 performs photoelectric conversion of the iris image, and then image data is generated in the image processing section 13. The image capture section 61 loads the image data and outputs the data to the iris authentication processing section 62 (step S46).

The iris authentication processing section 62 performs authentication processing in the same way as in the step S43 (step S47). In the authentication processing, when the iris is within the focusing range 18 of the second branch light path, and the iris has been registered in the iris database 63, authentication is achieved. When authentication is achieved (YES in step S47), the section 62 outputs a result of the authentication to the authentication result output section 64. Then, the authentication result output section 64 outputs an authentication success signal (step S44), and then the processing is finished.

When the authentication using the iris image formed through the second branch light path is still not achieved (NO in step S47), whether predetermined limited time has passed from the beginning of processing is determined (step S48). When the limited time has not passed (NO in step S48), the procedure is returned to the step S41 and the above processing is repeated in order to take the iris image using the first branch optical system again. When the limited time has passed while the authentication is not achieved (YES in step S48), the authentication processing section 62 outputs a result of authentication failure to the authentication result output section 64. Then, the authentication result output section 64 outputs an authentication failure signal (step S49), and then the processing is finished.

In the processing, the image capture section 61 may load a plurality of image data from the image processing section 13 in the step S42 and the step S46, and the authentication processing section 62 may perform authentication processing for the plurality of image data in the step S43 and the step S47. In this case, if authentication is achieved in any of image data, the procedure is transited to the step S44, wherein the authentication success signal is outputted from the authentication result output section 64.

According to such an iris authentication system 1 of the first embodiment of the invention, the first and second branch optical systems are configured by the imaging optical system 110 of the iris image pickup camera 100, and the focusing ranges on the common light axis of respective light paths are displaced from each other, therefore if the iris of the person to be authenticated is in either of the focusing ranges of the first and second branch optical systems, a clear iris image in focus can be obtained. Thus, a range where the iris image in focus can be taken is expanded for the person to be authenticated, and consequently prompt authentication processing can be performed without bothering the person to be authenticated.

Moreover, in the iris image pickup camera 100, since the focusing range is expanded by a configuration where the iris image is formed through the first and second branch light paths, the imaging optical system need not have the zoom lens, automatic focusing function, and automatic zoom function, and consequently cost can be reduced.

Moreover, in the imaging optical system 110, since the first and second branch light axes join together on this side of the lens group 115, the plurality of imaging elements need not be provided correspondingly to the first and second branch light axes, and consequently cost can be reduced.

Furthermore, in the imaging optical system 110, since respective focusing ranges 17 and 18 of the first and second branch optical paths are configured in a manner of displacing from each other with the overlapped area, the continuous expanded-focusing-range is realized, and the iris image in focus can be obtained for the iris situated in all regions within the expanded focusing range. It will be appreciated that even if the two focusing ranges 17, 18 are continued without being overlapped, the continuous expanded-focusing-range is realized. Moreover, even if an extremely narrow gap is present between the two focusing ranges 17 and 18, the continuous expanded focusing range is substantially realized, and consequently advantageous effects as above are obtained. That is, as long as respective focusing ranges 17 and 18 of the first and second branch optical paths are adjacent to each other, the advantageous effects are obtained.

(Second Embodiment)

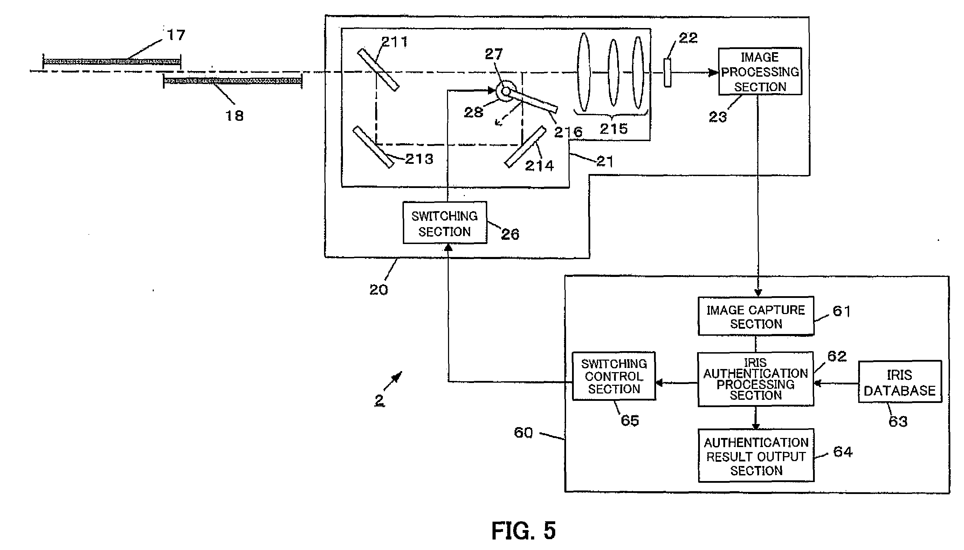

Next, an iris authentication system of a second embodiment of the invention is shown in Fig. 5. In Fig. 5, the embodiment is the same as the first embodiment in that the iris authentication system includes the iris image pickup camera and the iris authentication device, and the iris authentication camera includes the imaging optical system, imaging element, image processing section, and switching section. In addition, the iris authentication device is the same as the device in the first embodiment. Hereinafter, the same configuration in the embodiment as in the first embodiment is omitted to be described.

An imaging optical system 21 of an iris image pickup camera 20 are configured by a half mirror 211, mirrors 213 and 214, a rotational mirror 216 and a lens group 215. The iris image pickup camera 20 includes a spindle 27 to which a rotational mirror 216 is fixed and a motor 28 for rotating the spindle 27. In the embodiment, the half mirror 211 and the lens group 215 configure a first branch optical system, and the half mirror 211, mirror 213, mirror 214, rotational mirror 216 and lens group 215 configure a second branch optical system.

The rotational mirror 216 is provided near a junction of light axes of the first and second branch optical systems. The rotational mirror 216 selectively activates the first or second branch light path by changing an angle by rotation.

Fig. 5 shows a state where a first branch light path in the first branch optical system is activated by the rotational mirror 216. In this state, since the rotational mirror 216 is withdrawn in a position where the first branch light path is not shielded, light from the iris passes through the first branch light path, that is, it is transmitted through the half mirror 211 and the lens group 215, and then projected to an imaging element 22. Light that has traveled along the second branch light path is reflected in a direction different from a direction toward the lens group 215 by a reflective surface of the rotational mirror 216. Therefore, the light does not reach the imaging element 22 through the lens group 215.

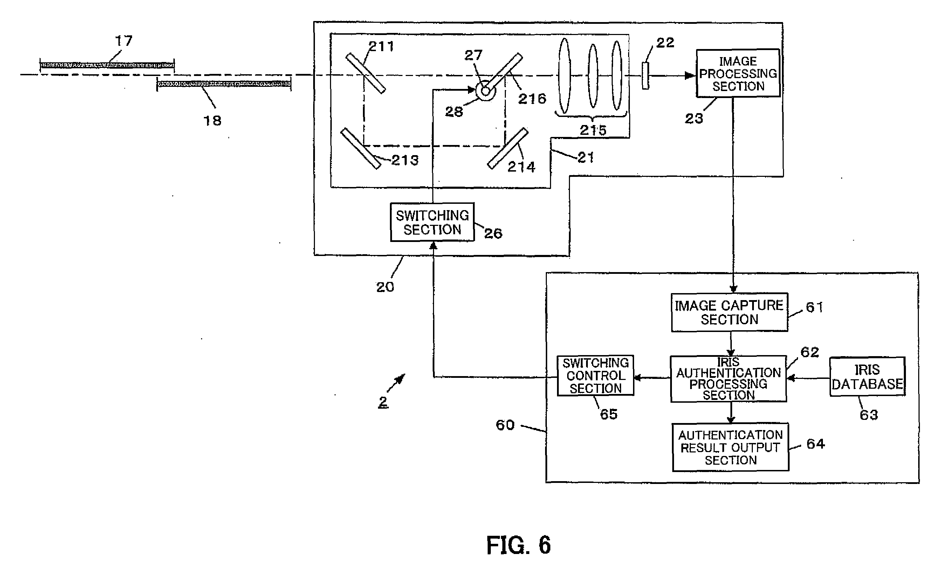

Fig. 6 shows a state where the second branch light path is activated. In this state, the light from the iris passes through the second branch light path, that is, it is reflected by the half mirror 211, mirror 213, and mirror 214, and then reflected on the reflective surface of the rotational mirror 216 at the junction of the first and second branch light axes and thus injected into the lens group 215, and then projected to the imaging element 22. Light that has traveled along the first branch light path is shielded by a back face of the rotational mirror 216, and consequently not injected into the lens group 215.

In this way, the rotational mirror 216 is rotated between an angle at which the first branch light path is activated (first light path activation angle) and an angle at which the second branch light path is activated (second light path activation angle). This rotational operation is performed by controlling the motor 28 by the switching section 26. The switching section 26 receives a switching control signal from a switching control section 65 of an iris authentication device 60, and controls the motor 28 according to the switching control signal.

In the embodiment, when the rotational mirror 216 is at the second light path activation angle as shown in Fig. 6, imaging may be performed multiple times by slightly changing the angle of the rotational mirror 216. Thus, imaging can be performed in vertically displaced ranges, and consequently ranges where the iris can be imaged can be expanded in a vertical direction.

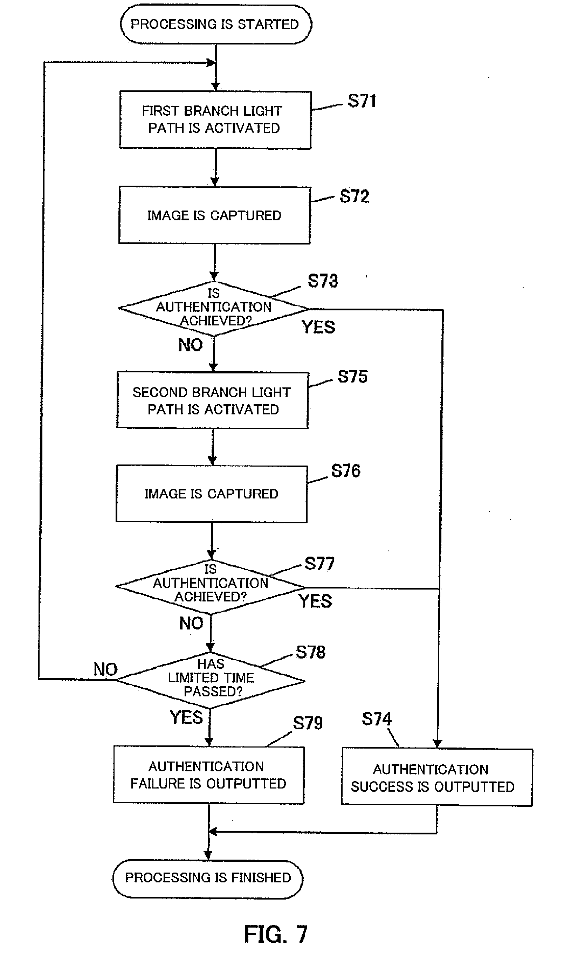

For the iris authentication system 2 configured as above, operation thereof is described using Fig. 7. First, the motor 28 is driven by the switching section 16 to set the rotational mirror 216 to be at the first light path activation angle as shown in Fig. 5, so that the first branch light path is activated (step S71). Then, an iris image formed through the first branch light path is subjected to photoelectric conversion by the imaging element 22, and then image data are generated in an image processing section 23. An image capture section 61 of the iris authentication device 60 loads the image data and outputs the data to an iris authentication processing section 62 (step S72).

The iris authentication processing section 62 performs authentication processing in the same way as in the first embodiment using the image data outputted from the image capture section 61 (step S73). When authentication is achieved (YES in step S73), the iris authentication processing section 62 outputs a result of the authentication to an authentication result output section 64. The authentication result output section 64 outputs an authentication success signal according to the result of authentication success (step S74), and then processing is finished.

when authentication is not achieved (NO in step S73), the iris authentication processing section 62 outputs a result of authentication failure to the switching control section 65. Then, the switching control section 65 outputs a switching control signal to the switching section 16 of the iris image pickup camera 100. The switching section 26 sets the rotational mirror 216 to be at the second light path activation angle according to the switching control signal, as shown in Fig. 6 (step S75). In this state, the light from the iris is focused through the second branch light path and then an iris image is projected to the imaging element 12. Then, image data are generated in an image processing section 23.

The image capture section 61 loads the image data, and outputs the data to the iris authentication processing section 62 (step S76). The iris authentication processing section 62 performs authentication processing using the image data (step S77), and when authentication is achieved, it outputs a result of the authentication to the authentication result output section 64. Then, the authentication result output section 64 outputs an authentication success signal (step S74), and then the processing is finished.

When the authentication in the step S77 is still not achieved (NO in step S77), whether limited time has passed is determined (step S78), and when elapsed time is within the limited time (NO in step S78), the procedure is returned to the step S71 and the above processing is repeated. When the limited time has passed while authentication is not achieved (YES in step S78), the iris authentication processing section 62 outputs a result of it to the authentication result output section 64. Then, the authentication result output section 64 outputs an authentication failure signal (step S79), and then processing is finished.

According to such an iris authentication system 2 of the second embodiment of the invention, the same advantageous effects as in the iris authentication system 1 of the first embodiment are obtained. Furthermore, in the embodiment, since light from the iris as the object is transmitted through the half mirror only once in both of a case that it passes through the first branch light path and a case that it passes through the second branch light path, the embodiment is advantageous compared with the first embodiment in the respect of small light loss.

Moreover, in the iris image pickup camera 20 of the embodiment, when the second branch light path is activated by the rotational mirror 26, light that travels along the first branch light path is shielded by the back face of the rotational mirror 26, therefore means for shielding the first branch light path need not be separately provided, leading to a simple structure.

Furthermore, as described above, the rotational mirror 216 is slightly displaced at an angle larger or smaller than the second light path activation angle, thereby an angle of view of the camera can be displaced in a vertical direction, and consequently ranges where the iris can be imaged can be expanded in a vertical direction.

(Third Embodiment)

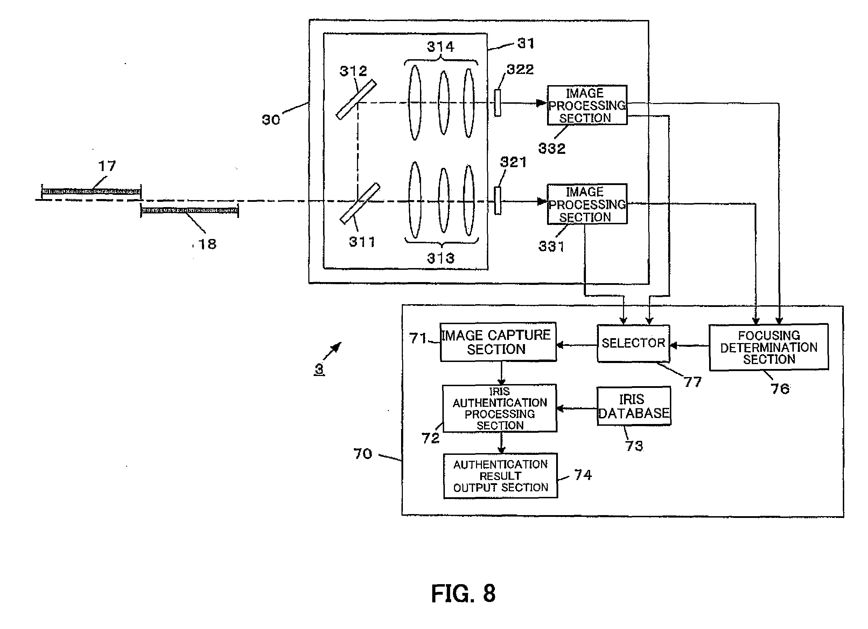

Next, an iris authentication system 3 of a third embodiment of the invention is shown in Fig. 8. In Fig. 8, the embodiment is the same as the first embodiment in that the iris authentication system includes the iris image pickup camera and the iris authentication device. As shown in Fig. 8, an iris image pickup camera 30 of the embodiment includes an imaging optical system 31, a first imaging element 321, a second imaging element 322, a first image processing section 331, and a second mage processing section 332.

The imaging optical system 31 is configured by a half mirror 311, mirror 312, first lens group 313, and second lens group 314. The half mirrors 311 is disposed on an extension of a light axis of the first lens group 313, and held in such a direction that part of injected light from an object side is reflected upward. The mirror 312 is disposed on an extension of a light axis of the second lens group 314 and in a position above the half mirror 311, and held in such a direction that reflected light from the half mirror 311 is reflected toward the second lens group 314.

The half mirror 311, mirror 312, first and second lens groups 313, 314 are disposed such that a distance between the half mirror 311 and the first lens group 313 is equal to a distance between the mirror 312 and the second lens group 314. The first lens group 313 is in the same configuration as in the second lens group 314.

In the embodiment, the half mirror 311 and the first lens group 313 configure a first branch optical system, and the half mirror 311, mirror 312, and second lens group 314 configure a second branch optical system. A position of the half mirror 311 is a branch point of light axes of the two branch optical systems. The imaging optical system 31 has a common light axis in an object side with respect to the branch point of the light axes of the two branch optical systems.

As above, in the imaging optical system 31 of the embodiment, since the first and second lens groups 313 and 314 are in the same configuration, displacement between the focusing ranges 17 and 18 of the first and second branch light paths is equal to difference in length Ld between the first branch light path and the second branch light path in the imaging optical system 31. In the embodiment, since the distance between the half mirror 311 and the first lens group 313 is equal to the distance between the mirror 312 and the second lens group 314, the difference in length Ld between the two branch light paths essentially corresponds to a distance between the half mirror 311 and the mirror 312. In the embodiment, the imaging optical system 31 is designed such that when depth of each of the focusing ranges of the first and second branch optical systems is assumed to be L, Ld=L is given, thereby the focusing range of the first branch light path and the focusing range of the second branch light path are continued, and consequently an image is in focus by one of the branch optical systems in all regions of the expanded focusing range.

According to such a configuration of the imaging optical system 31, an iris image is projected to the first imaging element 321 by the first branch optical system, and an iris image is projected to the second imaging element 322 by the second branch optical system as well. The first imaging element 321 and the second imaging element 322 perform photoelectric conversion of the projected iris images and thus output electric signals. Then, the first image processing section 331 and the second image processing section 332 perform processing such as A/D conversion of the electric signals outputted from the first imaging element 321 and the second imaging element 322 to generate image data, respectively.

An iris authentication device 70 includes a focusing determination section 76, a selector 77, an image capture section 71, an iris authentication processing section 72, an iris database 73, and an authentication result output section 74. The focusing determination section 76 is connected to both of the two image processing sections 331 and 332 of the iris image pickup camera 30. The focusing determination section 76 operates to detect the focusing level of image data outputted from each of the image processing sections 331 and 332, to determine which image data are corresponding to an image in focus, and to output a determination result to the selector 77. The focusing determination section 76 converts the image data into spatial frequency by Fourier transform to detect the focusing level. Then, the section 76 performs focusing determination by assuming an integral value of a predetermined spectrum component as a focusing level, and comparing the focusing level with a threshold value.

The selector 77 is also connected to both of the two image processing sections 331 and 332 of the iris image pickup camera 30, and inputted with the image data from the image processing sections 331 and 332. The selector 77 operates to output one of the two image data, which is in focus, to the image capture section 71 according to the result of the focusing determination outputted from the focusing determination section 76.

The image capture section 71 operates to load the image data in focus selected by the selector 77 as image data for iris authentication, and to output the data to the iris authentication processing section 72. The iris database 73 stores an iris image of a registrant. The iris authentication processing section 72 operates to perform authentication processing by comparing an iris portion in the image data with the iris image stored in the iris database 73 using the image data outputted from the image capture section 71, similarly as in the first embodiment. The authentication result output section 74 also operates to output an authentication result signal similarly as in the first embodiment.

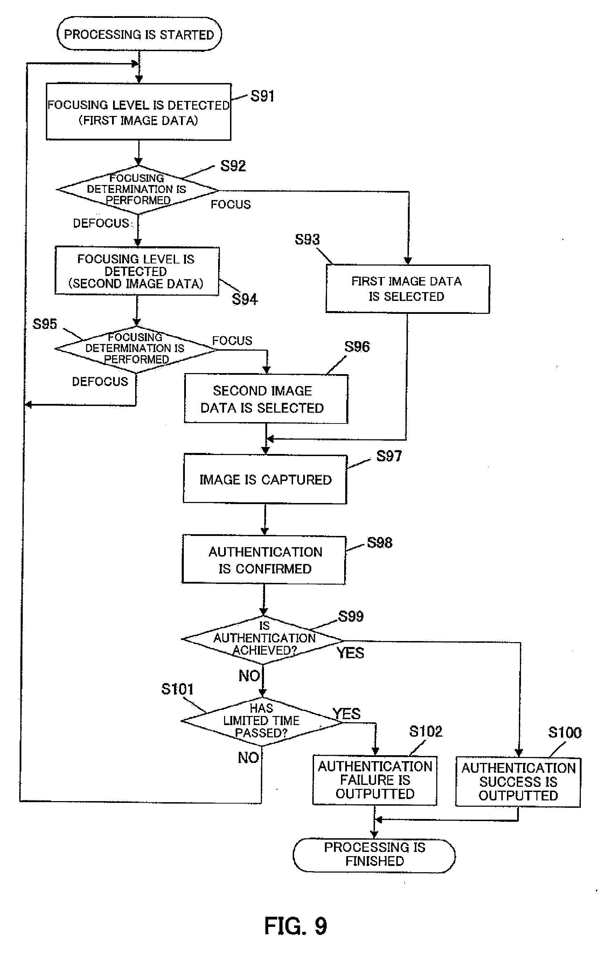

For the iris authentication system 3 configured as above, operation is described using Fig. 9. The image processing sections 331 and 332 output image data to the focusing determination section 76 respectively. Then, the focusing determination section 76 first detects a focusing level of image data (first image data) outputted from the image processing sections 331 (step S91). Then, the focusing determination section 76 performs focusing determination (step S92), and when image data outputted from the image processing sections 331 has a focusing level equal to a threshold value or more (YES in step S92), it outputs a determination result to the selector 77, the result showing that the image data are to be selected (step S93).

On the other hand, when the focusing level of the image data is lower than the threshold value in the focusing determination in the step S92 (NO in step S92), the focusing determination section 76 detects a focusing level of image data (second image data) outputted from the image processing sections 332 (step S94). Then, the focusing determination section 76 performs focusing determination for the image data (step S95), and when a focusing level is equal to a threshold value or more (YES in step S95), it outputs a determination result to the selector 77, the result showing that the image data are to be selected (step S96). When the focusing level is lower than the threshold value (NO in step S95), procedure is returned to the step S91, and the focusing determination is repeated using other image data outputted from the image processing section 331 and the image processing section 332.

When the image data are selected in the step S93 or the step S96, the image capture section 71 loads the selected image data from the selector 77, and outputs the data to the iris authentication processing section 72 as image data for iris authentication (step S97). The iris authentication processing section 72 performs authentication processing using image data outputted from the image capture section 71 (step S98). Then, the iris authentication processing section 72 determines whether authentication is achieved or not (step S99), and when the authentication is achieved (YES in step S99), it outputs a result of the authentication to the authentication result output section 74. Then, the authentication result output section 74 outputs an authentication success signal (step S100), and then processing is finished.

On the other hand, when the authentication is not achieved in the iris authentication processing section 72 (NO in step S99), whether predetermined limited time has passed from the beginning of processing is determined (step S101), and when the limited time has still not passed (NO in step S101), the procedure is returned to the step S91, and the focusing determination is repeated. When the limited time has passed while the authentication is still not achieved (YES in step S101), the authentication processing section 72 outputs a result of authentication failure to the authentication result output section 74. Then, the authentication result output section 74 outputs an authentication failure signal (step S102), and then the processing is finished.

In the iris authentication system 3 of the third embodiment of the invention, similarly as in the first embodiment, the imaging optical system 31 of the iris image pickup camera 30 has the first and second branch optical systems; the focusing ranges on the common light axis of which are displaced from each other, and the light through each of the branch light paths is focused to generate the image data of the iris image, therefore as long as the iris of the person to be authenticated is in one of the focusing ranges of the first and second branch light paths, either of the first and second image data is corresponding to the image in focus. That is, the range where the iris image in focus can be taken is expanded, and consequently the failure of authentication due to defocusing of the taken iris image may be reduced. Thus, prompt authentication processing can be realized.

Moreover, in the iris authentication device 70 of the embodiment, the image data in focus are previously selected from image data that have been taken through the first and second branch optical systems, and then the authentication processing is performed in the iris authentication processing section 72. According to such a configuration, since such authentication processing that authentication failure is caused by defocusing of an image is not performed, time required for obtaining an authentication result signal can be reduced.

(Fourth Embodiment)

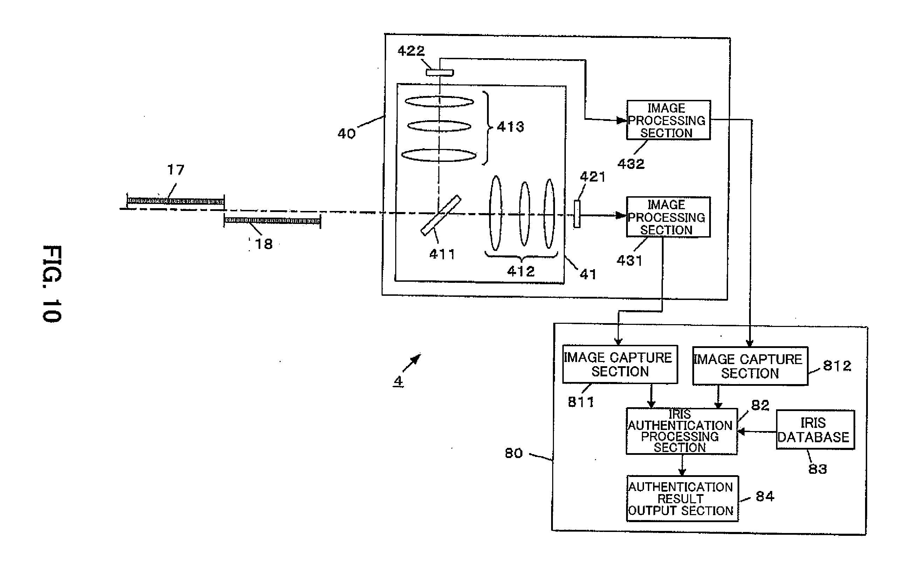

Next, an iris authentication system 4 of a fourth embodiment of the invention is shown in Fig. 10. In Fig. 10, the iris authentication system 4 includes the iris image pickup camera and the iris authentication device similarly as in the first embodiment. An iris image pickup camera 40 of the embodiment includes an imaging optical system 41, a first imaging element 421, a second imaging element 422, a first image processing section 431, and a second image processing section 432.

The imaging optical system 41 is configured by a half mirror 411, first lens group 412, and second lens group 413. The first lens group 412 and the second lens group 413 are disposed in a manner that their light axes are perpendicular to each other. The half mirror 411 is disposed at an intersection of the two light axes, and held in such a direction that part of injected light is reflected from an object side to the second lens group 413. The first lens group 412 and the second lens group 413 are disposed such that respective distances to the intersection of the light axes, or respective distances to the half mirror 411 are the same.

In the first lens group 412 and the second lens group 413, distances to respective focusing ranges 17 and 18 are different, and the focusing range 17 of the first lens group 412 is more distant than the focusing range 18 of the second lens group 413. Moreover, in the two lens groups 412 and 413, the focusing ranges are different in depth, and the focusing range 17 of the first lens group 412 is shallower than the focusing range 18 of the second lens group 413. Furthermore, the two lens groups 412 and 413 are different in magnification, and as described before using Fig. 3, they are set such that an iris image of an iris situated in the most distant end of each of the focusing ranges is larger than a minimum size where the iris can be authenticated, and an iris image of an iris situated in the nearest end of each of the focusing ranges is smaller than a maximum size that can be handled in the iris authentication processing.

In the embodiment, the half mirror 411 and the first lens group 412 configure a first branch optical system, and the half mirror 411 and the second lens group 413 configure a second branch optical system. A position of the half mirror 411 is a branch point of light axes of the two branch optical systems. Furthermore, the imaging optical system 41 has a common light axis in an object side from the branch point of the light axes of the two branch optical systems.

In the iris image pickup camera 40 configured as above, an iris image is formed on an imaging surface of a first imaging element 421 by light through the first branch light path, and an iris image is also formed on an imaging surface of a second imaging element 422 by light through the second branch light path. The first imaging element 421 and the second imaging element 422 perform photoelectric conversion of the formed iris images and thus output electric signals. Then, the first image processing section 431 and the second image processing section 432 perform processing such as A/D conversion of the electric signals outputted from the first imaging element 421 and the second imaging element 422 to generate image data, respectively.

An iris authentication device 80 includes a first image capture section 811, a second image capture section 812, an iris authentication processing section 82, an iris database 83, and an authentication result output section 84. The first and second image capture sections 811 and 812 are connected to the image processing sections 431 and 432 of the iris image pickup camera 40 respectively. Configurations of the first and second image capture sections 811 and 812 are the same as the configuration of the image capture section 61 in the first embodiment. Moreover, configurations of the iris authentication processing section 82, iris database 83, and authentication result output section 84 are the same as corresponding sections in the first embodiment.

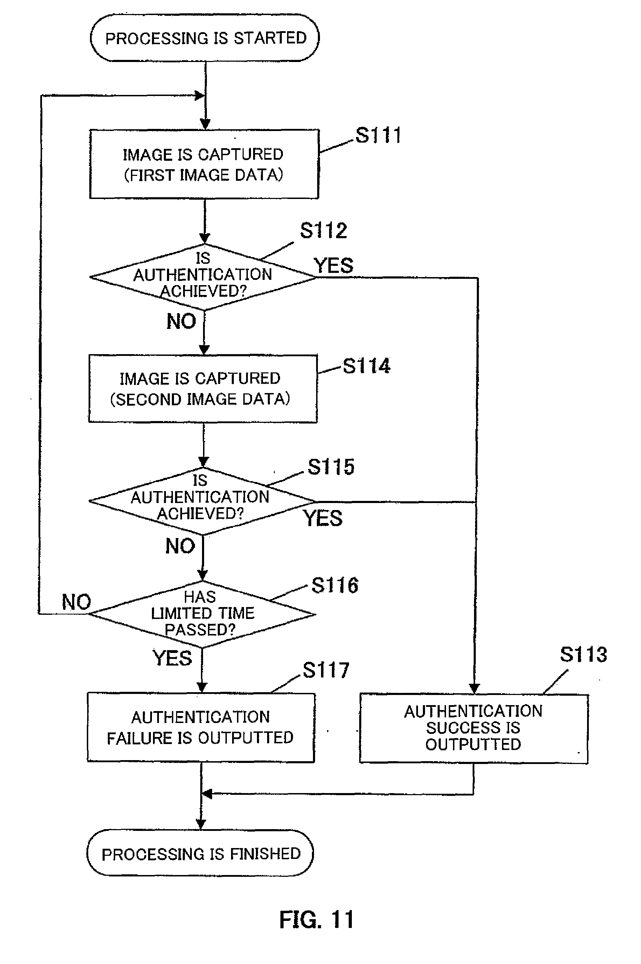

For the iris authentication system 4 configured as above, operation is described using Fig. 11. First, the first image capture section 811 loads image data (first image data) from the first image processing section 431 of the iris image pickup camera 40, and outputs the data to the iris authentication processing section 82 (step S111). The iris authentication processing section 82 performs authentication processing in the same way as in the first embodiment using the image data outputted from the first image capture section 811 (step S112). When authentication is achieved (YES in step S112), the iris authentication processing section 82 outputs a result of the authentication to the authentication result output section 84. Then, the authentication result output section 84 outputs an authentication success signal according to the result of authentication success (step S113), and then the processing is finished.

When authentication is not achieved (NO in step S112), the second image capture section 812 loads image data (second image data) from the second image processing section 432 of the iris image pickup camera 40, and outputs the data to the iris authentication processing section 82 (step S114). The iris authentication processing section 82 performs authentication processing in the same way as in the step S112 using the image data (step S115), and when authentication is achieved, the section 82 outputs a result of the authentication to the authentication result output section 84. Then, the authentication result output section 84 outputs the authentication success signal (step S113), and then the processing is finished.

When the authentication in the step S115 is still not achieved (NO in step S115), whether limited time has passed is determined (step S116), and when elapsed time is within the limited time (NO in step S116), procedure is returned to the step S111 and the above processing is repeated. When the limited time has passed while authentication is not achieved (YES in step S116), the iris authentication processing section 82 outputs a result of authentication failure to the authentication result output section 84. Then, the authentication result output section 84 outputs an authentication failure signal (step S117), and then processing is finished.

In the iris authentication system 4 of the fourth embodiment of the invention, similarly in the third embodiment, the imaging optical system 41 of the iris image pickup camera 40 has the first and second branch optical systems; the focusing ranges on the common light axis of which are displaced from each other, and the light through each of the branch light paths is focused to generate the image data of the iris image, therefore as long as the iris of the person to be authenticated is in either of the focusing ranges of the first and second branch light paths, either of the first and second image data is corresponding to the image in focus. That is, the range where the iris image in focus can be taken is expanded, and consequently the failure of authentication due to defocusing of the taken iris image may be reduced. Thus, prompt authentication processing can be realized.

While the distance from the half mirror 411 as the branch point of the light axes of the first and second branch optical systems to the first lens group 413 and the distance to the second lens group 414 were set to be equal in the imaging optical system 41 in the above description, the invention is not limited to this. That is, the distance from the branch point to the first lens group 413 and the distance to the second lens group 414 may be set to be different from each other as in the third embodiment. Again in this case, the two lens groups 413 and 414 are configured in a way that they have different magnifications so that the iris images formed on respective imaging elements are approximately the same in size, and the two focusing ranges are adjacent to each other.

(Fifth Embodiment)

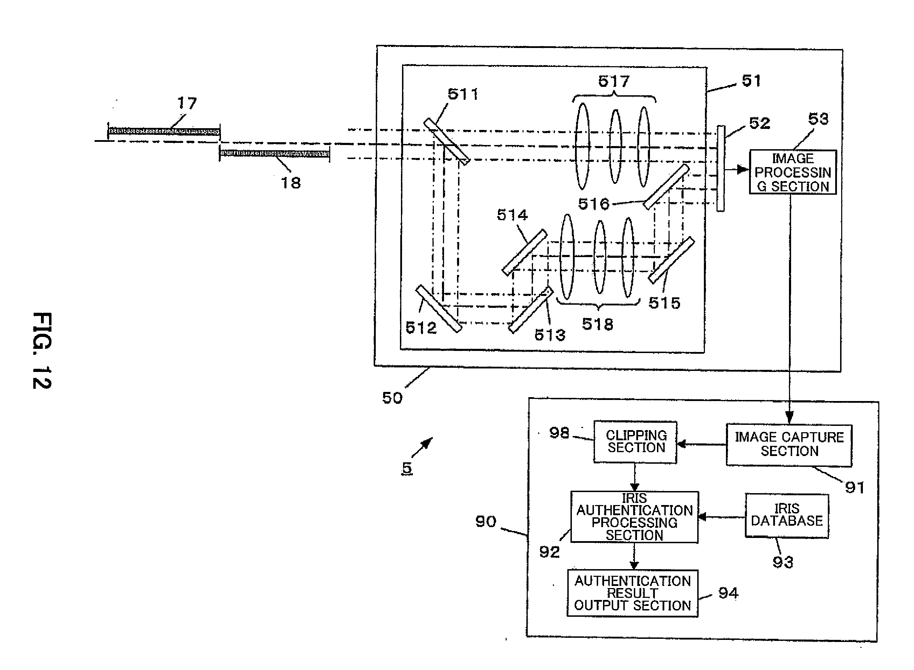

Next, an iris authentication system 5 of a fifth embodiment of the invention is shown in Fig. 12. In Fig. 12, the iris authentication system 5 includes the iris image pickup camera and the iris authentication device similarly as in the first embodiment. An iris image pickup camera 50 in the embodiment includes an imaging optical system 51, imaging element 52, and image processing section 53; and the imaging optical system 51 is configured by a half mirror 511, mirrors 512 to 516, a first lens group 517, and a second lens group 518.

The first lens group 517 and the second lens group 518 are disposed such that light axes of them are parallel to each other. The half mirror 511 is disposed on an extension of a light axis of the first lens group 517, and held in such a direction that part of injected light from an object side is reflected downward. The imaging element 52 is disposed such that an iris image formed by the first lens group 517 is projected to an upper region of the element. The mirrors 512 to 514 are disposed such that light reflected by the half mirror 511 is reflected in turn by the mirrors and thus injected into the second lens group 518. The mirrors 515 and 516 are disposed such that the iris image formed by the second lens group 518 are reflected in turn by the mirrors and thus projected to a lower region of the imaging element 52 in a direction parallel to the light axis of the second lens group 518.

In the embodiment, the half mirror 511 and the first lens group 517 configure a first branch optical system, and the half mirror 511, mirrors 512 to 516, and second lens group 518 configure a second branch optical system. A position of the half mirror 511 is a branch point of light axes of the two branch optical systems. The imaging optical system 51 has a common light axis in an object side from the branch point of the light axes of the two branch optical systems.

The first lens group 517 and the second lens group 518 are in the same configuration. Therefore, the focusing ranges 17 and 18 of them are displaced on the common light axis by difference Ld between length of the first branch light path and length of the second branch light path within the imaging optical system 51. In the embodiment, the imaging optical system 51 is set such that the difference Ld between the two branch light paths is equal to the focusing range 18 of the second branch light path. Thus, the expanded focusing range is formed in a manner that the focusing range 17 of the first branch light path and the focusing range 18 of the second branch light path are continued.

In the iris image pickup camera 50 configured as above, when an iris as an object is situated on the common axis, an iris image is formed on the upper region of an imaging surface of the imaging element 52 by light through the first branch light path, and an iris image is formed on the lower region of the imaging surface of the imaging element 52 by light through the second branch light path. The imaging element 52 performs photoelectric conversion in this condition and thus outputs an electric signal. The image processing section 53 performs processing such as A/D conversion to the electric signal to generate image data, and outputs the data.

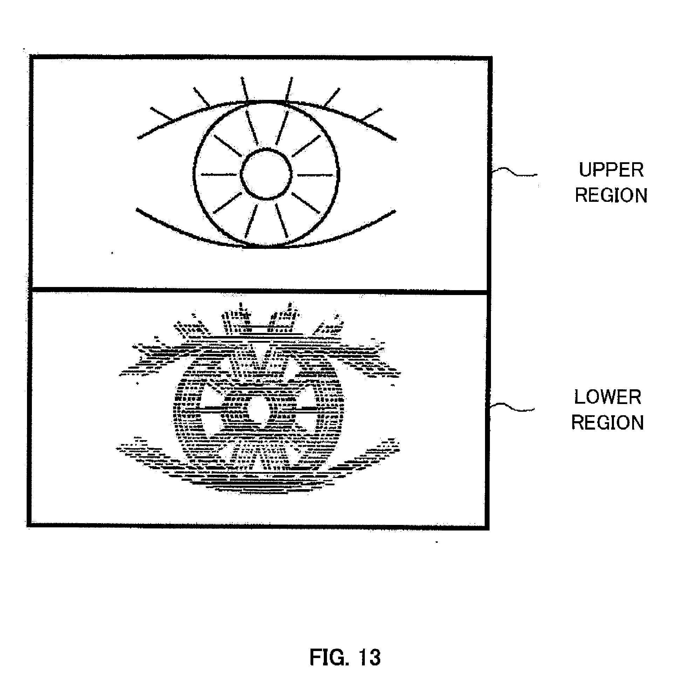

Fig. 13 is a view showing image data generated by the iris image pickup camera 50 of the embodiment. Since, the expanded focusing range is formed in a manner that the focusing range 17 of the first branch light path and the focusing range 18 of the second branch light path are continued as described above, when the iris as the object is within the expanded focusing range, an iris image in focus is obtained in one of the upper and lower regions of image data, and an iris image in defocus is obtained in the other region. An example of Fig. 13 shows image data obtained when the iris as the object is situated within the focusing range of the first branch light path. The iris image in focus exists in the upper region of the image data, and the iris image in defocus exists in the lower region.

Return to Fig. 12, and the iris authentication device 90 of the embodiment includes an image capture section 91, a clipping section 98, an iris authentication processing section 92, an iris database 93, and an authentication result output section 94. The image capture section 91 operates to load the image data outputted from the image processing section 53 of the iris image pickup camera 50 as image data for iris authentication similarly as in the first embodiment. The clipping section 98 operates to clip an upper iris image from the upper region of the image data loaded by the image capture section 91, to clip a lower iris image from the lower region, and then to output each of them to the iris authentication processing section 92. Configurations of the iris authentication processing section 92, iris database 93, and authentication result output section 94 are the same as corresponding sections in the first embodiment.

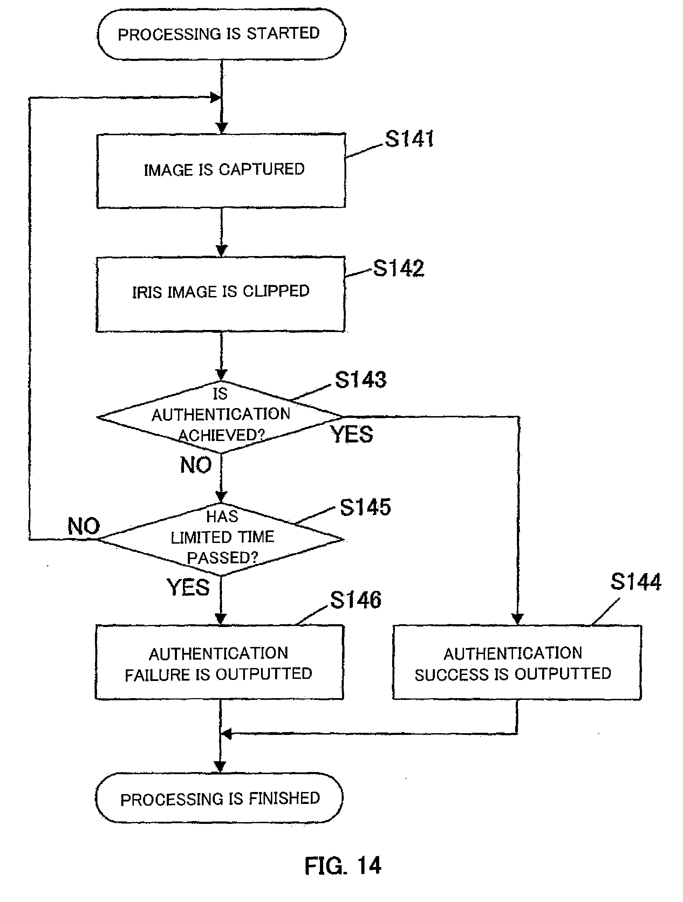

For the iris authentication system 5 configured as above, operation is described using Fig. 14. First, the image capture section 91 loads the image data from the image processing section 53 of the iris image pickup camera 50, and outputs the data to the clipping section 98 (step S141). The clipping section 98 clips the upper iris image and the lower iris image from the upper region and the lower region of the image data, and then outputs each of them to the iris authentication processing section 92 (step S142).

The iris authentication processing section 92 performs authentication processing using the upper iris image and the lower iris image (step S143). When authentication is achieved in at least one of the images (YES in step S143), the iris authentication processing section 92 outputs a result of the authentication to the authentication result output section 94. Then, the authentication result output section 94 outputs an authentication success signal according to the result of authentication success (step S144), and then processing is finished.

When the authentication is not achieved (NO in step S143), whether limited time has passed is determined (step S145), and when elapsed time is within the limited time (NO in step S145), procedure is returned to the step S141 and the above processing is repeated. When the limited time has passed while authentication is not achieved (YES in step S145), the iris authentication processing section 92 outputs a result of authentication failure to the authentication result output section 94. Then, the authentication result output section 94 outputs an authentication failure signal (step S146), and then the processing is finished.

While a configuration where the first and second branch optical systems have the lens groups 517 and 518 is used in the above example, the invention is not limited to this. That is, a configuration may be used, in which the first and second branch optical systems have a common lens group, and light transmitted through the half mirror 511 is injected into an upper region of the common lens group, and light which is reflected by the half mirror 511 and then reflected by the mirrors 512 to 513 is injected into a lower region of the common lens group. If the depth of field of the common lens group is sufficiently large, in the imaging element provided behind the common lens group, as shown in Fig. 13, an iris image formed through the first branch light path is projected to the upper region, and an iris image formed through the second branch light path is projected to the lower region.

In the iris authentication system 5 of the fifth embodiment of the invention, similarly in the first embodiment, the imaging optical system 51 of the iris image pickup camera 50 has the first and second branch optical systems; the focusing ranges on the common light axis of which are displaced from each other, and the light through each of the branch light paths is focused to generate the image data of the iris image, therefore as long as the iris of the person to be authenticated is in either of the focusing ranges of the first and second branch optical systems, either of the first and second image data is corresponding to the image in focus. Thus, the range where the iris image in focus can be taken is expanded, and consequently the failure of authentication due to defocusing of the taken iris image may be reduced, and prompt authentication processing can be realized.

(Sixth Embodiment)

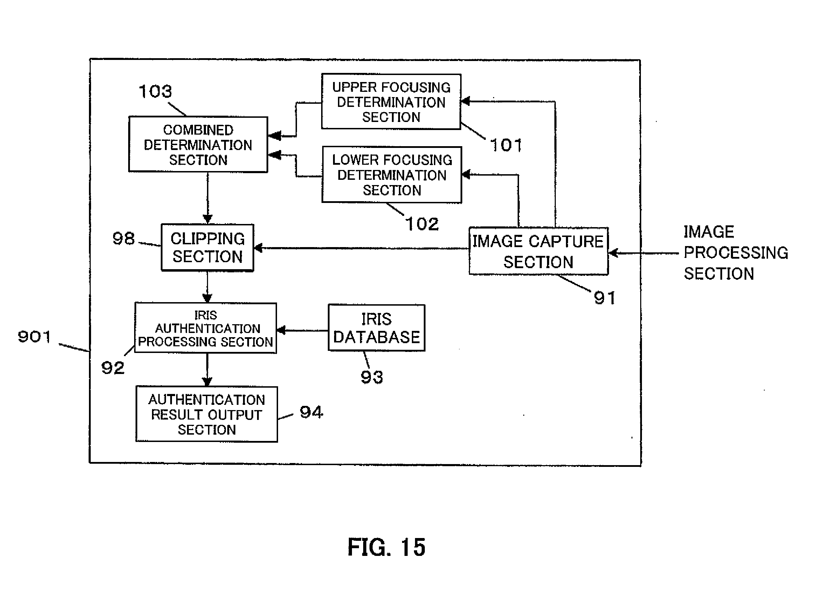

Fig. 15 is a view showing an example of an iris authentication device of a sixth embodiment. An iris authentication device 901 of the embodiment further includes an upper focusing determination section 101, a lower focusing determination section 102, and a combined determination section 103 in addition to the configuration of the iris authentication device 90 of the fifth embodiment. The upper focusing determination section 101 and the lower focusing determination section 102 determine focusing levels of the upper region and the lower region using the image data outputted from the image capture section 91, and then output results of determination, respectively. Configurations for performing focusing determination in the upper focusing determination section 101 and the lower focusing determination section 102 are the same as the focusing determination section 76 in the third embodiment as described before.

When the upper focusing determination section 101 determines that the upper region is the image in focus, the combined determination section 103 outputs an upper clipping signal, and when the lower focusing determination section 102 determines that the lower region is the image in focus, it outputs a lower clipping signal. In the iris image pickup camera 50 of the embodiment, since the focusing range 17 of the first branch optical system and the focusing range 18 of the second branch optical system are continued without being overlapped, images in focus are not obtained in both of the upper and lower regions. When the image is determined to be defocused in either of the upper and lower regions, the combined determination section 103 outputs a recapture signal.

When the clipping section 98 receives the upper clipping signal or the lower clipping signal, according to the signal, clipping section 98 clips an iris image from the upper region or the lower region of the image data outputted from the image capture section 91, and then outputs the iris image to the iris authentication processing section 92. When the clipping section 98 receives the recapture signal, it disregards the image data that have been received from the image capture section 91, and loads new image data from the image capture section 91.

In this way, the iris authentication device 901 of the embodiment clips only the iris image in focus from the image data including the iris images formed through respective first and second branch optical systems by the upper focusing determination section 101, lower focusing determination section 102, combined determination section 103, and clipping section 98, and performs authentication processing in the iris authentication processing section 92. Thus, since such authentication processing that authentication is not achieved due to defocusing of an image is not performed, the time required for obtaining an authentication result signal can be reduced.

In the description, the imaging optical system has the two, first and second branch optical systems in any of embodiments, however, the invention is not limited to this, and the system may have three or more branch optical systems.

Moreover, respective optical components configuring the imaging optical system in the above description and arrangement of them are not limited to the above examples. The imaging optical system of the invention can be variously designed within the scope of the invention, for example, prisms may be used instead of the mirrors.

Moreover, a method for switching an imaging light path or a clipping image is not limited to the above examples. For example, switching control may be performed based on a result of determining a portion like a human eye after detecting geometrical features from a taken image, or the switching control may be performed according to an external control signal.

(Seventh Embodiment)

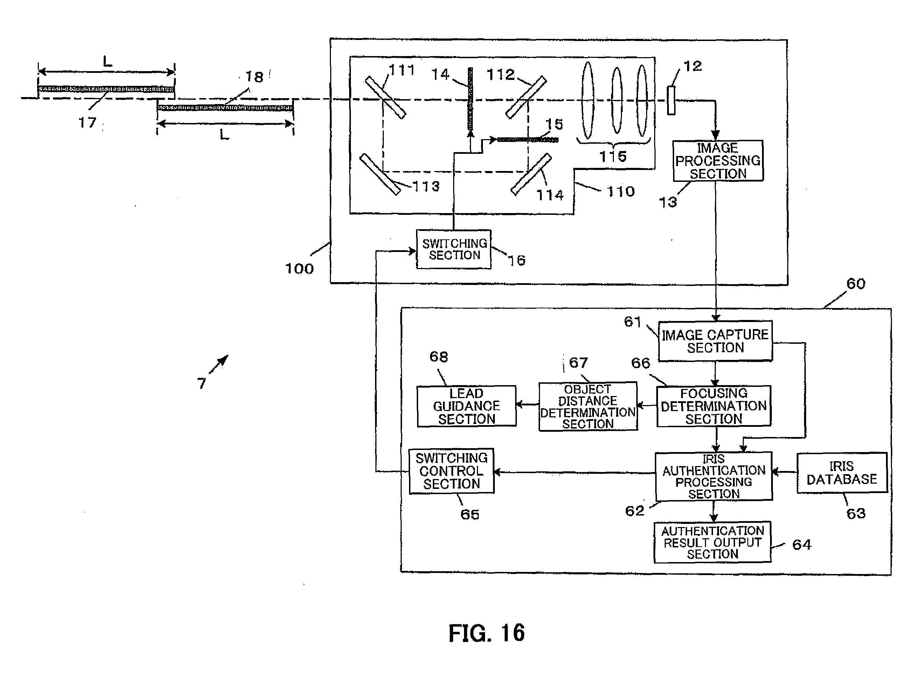

An iris authentication system of a seventh embodiment of the invention is shown in Fig. 16. In Fig. 16, an iris authentication system 7 includes an iris image pickup camera 100 and an iris authentication device 60. The iris authentication camera 100 includes an imaging optical system 110, an imaging element 12, an image processing section 13, shielding plates 14 and 15, and a switching section 16.

The imaging optical system 110 is configured by two half mirrors 111 and 112, two mirrors 113 and 114 , and a lens group 115. The lens group 115 is a group of fixed focal length lenses each of which is fixed, and has a focusing range having a depth of L. The half mirrors 111 and 112 are disposed on an extension of a light axis of the lens group 115. The half mirror 111 is held in such a direction that part of injected light from an object side is reflected downward, and the half mirror 112 is held in such a direction that part of injected light from a lower side is reflected toward the lens group 115.

The mirror 113 is disposed in a position where the reflected light from the half mirror 111 is injected, that is, below the half mirror 111, and held in such a direction that the reflected light from the half mirror 111 is reflected in a direction parallel to a light axis of the lens group 115. The mirror 114 is disposed in a position where light reflected by the half mirror 111 and the mirror 113 is injected, that is, in a position at the same height as that of the mirror 113, and held in such a direction that reflected light from the mirror 113 is reflected upward.

In a configuration as above, in the imaging optical system 110, the half mirror 111, half mirror 112 and lens group 115 configure a first branch optical system, and the half mirror 111, mirror 113, mirror 114, half mirror 112 and lens group 115 configure a second branch optical system. Hereinafter, light axes of first and second branch optical systems are called first and second branch light axes, and light paths along the first and second branch light axes are called first and second branch light paths.

The imaging optical system 110 has a common light axis in a region where an object is present, that is, in the outside of the iris image pickup camera 100, and the common light axis is branched into first and second branch light axes at the half mirror 111 as a branch point. The first and second branch light axes join together at the half mirror 112 as a junction.

The first branch optical system is configured such that light from an iris situated on the common light axis passes through the first branch light path to the imaging element 12 through the half mirror 111, half mirror 112, and lens group 115. The second branch optical system is configured such that the light from the iris situated on the common light axis passes through the second branch light path to the image element 12 through the half mirror 111, mirror 113, mirror 114, half mirror 112, and the lens group 115. When the first branch light path is compared to the second branch light path, the second branch light path is longer than the first branch light path by a distance between the half mirror 111 and the mirror 113 and a distance between the mirror 114 and the half mirror 112.

The imaging element 12 is a solid-state imaging element that converts the projected iris image and thus outputs an electric signal. The image processing section 13 operates to perform processing such as A/D conversion to an electric signal outputted from the imaging element 12, and to generate image data of the iris image.

The shielding plate 14 is disposed on the first branch light axis, and the shielding plate 15 is disposed on the second branch light axis. The shielding plates 14 and 15 are driven by a not-shown drive mechanism, and move between a position at which the branch light path is shielded (shielding position) and a position at which the branch light path is not shielded (withdrawal position). The switching section 16 operates to control movement of the shielding plates 14 and 15 according to a switching control signal from the switching control section 65 of the iris authentication device 60 described later. The switching section 16 controls movement of the two shielding plates such that when one of the shielding plates 14 and 15 is in the shielding position, the other is in the withdrawal position, that is, only one of the shielding plates shields the branch light path.

The iris image pickup camera 100 configured as above has first and second imaging modes, and takes an image of the iris as the object in each of the imaging modes. That is, a condition is a first imaging mode, in which the shielding plate 14 is situated in the withdrawal position and the shielding plate 15 is situated in the shielding position, and light from the iris passes through the first branch light path to form the iris image in the imaging element 12. Another condition is a second imaging mode, in which the shielding plate 14 is situated in the shielding position and the shielding plate 15 is situated in the withdrawal position, and light from the iris passes through the second branch light path to form the iris image in the imaging element 12. In the embodiment, the first and second imaging modes are selectively switched by moving the shielding plates 14 and 15 by the switching section 16.

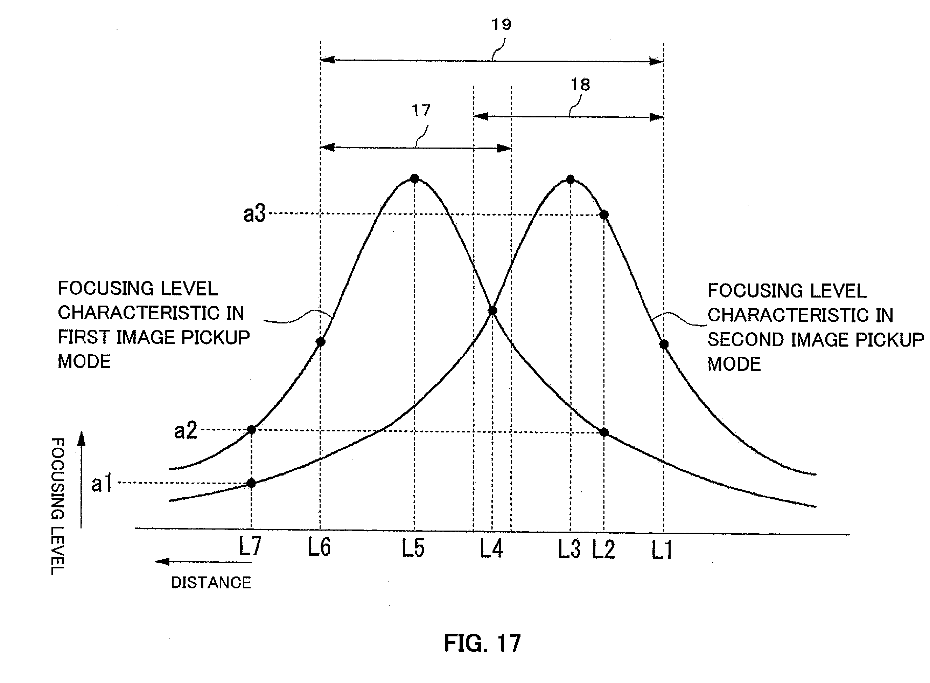

Fig. 17 is a view showing focusing level characteristics depending on a distance to the iris as the object in the first and second imaging modes. In Fig. 17, a horizontal axis represents a distance from the iris image pickup camera 100 to the iris as the object, and a vertical axis represents a focusing level of the iris image taken in each of the imaging modes. Since the first branch optical system and the second branch optical system share the lens group 115 as described above, focusing level characteristics of the two branch optical systems have approximately the same pattern. Since the first branch light path and the second branch light path are different in length as described above, the focusing level characteristic in the first imaging mode is different from the focusing level characteristic in the second imaging mode on an external common light axis of the iris image pickup camera 100 by difference in length between the first branch light path and the second branch light path. That is, the iris image pickup camera 100 has the focusing level characteristics in respective first and second imaging modes that are approximately the same in pattern and shifted from each other, as the focusing level characteristics depending on the distance from the iris image pickup camera 100 to the object.

In the focusing level characteristics in the first and second imaging modes, a range having a predetermined width, which includes a point at which the focusing level is maximized, is the focusing range. In the embodiment, the imaging optical system 110 is configured such that the difference between the first and second branch light paths is smaller than the size of the focusing range in each of the imaging modes. Thus, as shown in Fig. 17, the focusing range 17 in the first imaging mode and the focusing range 18 in the second imaging mode are adjacent to each other in a condition of being partially overlapped, and consequently the expanded focusing range 19 combining the two focusing ranges is formed. Therefore, in the iris image pickup camera 100, if the iris is in the expanded focusing range 19, a clear iris image that is in focus is obtained in one of first and second imaging modes.

Moreover, in the embodiment, depth of the focusing range is set such that the iris image within the range has a predetermined size suitable for iris authentication. That is, the lens group 115 is designed such that when the iris is in the most distant end of the focusing range 17, the iris image obtained in the first imaging mode has the minimum size required for iris authentication, and when the iris is in the nearest end of the focusing range 17, the iris image obtained in the first imaging mode has the maximum size allowed for iris authentication. Since the first branch optical system and the second branch optical system share the lens group 115, when the focusing range 17 in the first imaging mode satisfies the above conditions, the focusing range 18 in the second imaging mode also satisfies the above conditions.

Return to Fig. 16, and the iris authentication device 60 of the embodiment includes the image capture section 61, a focusing determination section 66, an object distance determination section 67, a lead guidance section 68, the switching control section 65, the iris authentication processing section 62, the iris database 63, and the authentication result output section 64. The image capture section 61 operates to load image data of the iris image taken by the iris image pickup camera 100 as image data for iris authentication, and to output the data to the focusing determination section 66 and the iris authentication processing section 62.

The focusing determination section 66 operates to calculate the focusing level of the image data outputted form the image capture section 61, and to output it to the object distance determination section 67. The focusing determination section 66 converts the image data into spatial frequency using Fourier transform, and calculates an integral value of a predetermined spectrum component of the spatial frequency as the focusing level. Furthermore, the focusing determination section 66 operates to perform focusing determination by comparing the calculated focusing level with a previously stored threshold value, and to output a determination result to the object distance determination section 67, iris authentication processing section 62, and switching control section 65. The threshold value is set in accordance with the focusing ranges 17 and 18 shown in Fig. 17.

The object distance determination section 67 operates to receive the focusing levels of the image data of the iris images taken in respective first and second imaging modes from the focusing determination section 66, and to determine the distance to the iris as the object based on difference between the focusing levels.

A configuration for determining the distance to the iris by the object distance determination section 67 is described with reference to Fig. 17. As described before, the focusing level characteristic in the first imaging mode and the focusing level characteristic in the second imaging mode are in approximately the same pattern and shifted from each other. Therefore, when an object is at a distance that is more distant than a distance L4 at which the two focusing level characteristics meet, an image obtained in the first imaging mode is high in focusing level compared with an image obtained in the second imaging mode. Conversely, when an object is in a position nearer than a distance L3, the image obtained in the second imaging mode is high in focusing level compared with the image obtained in the first imaging mode.

Here, a position where the two focusing level characteristics meet (position of the distance L4) is the center of respective positions (position of the distance L3 and position of a distance L5) at which each of the focusing levels reaches a peak in each of the two focusing level characteristics, and the position is the center of the expanded focusing range 19. Therefore, whether the object is situated on this side or in a back side of the center of the expanded focusing range 19 can be determined by comparing the focusing levels of the images obtained in the two imaging modes and determining a higher focusing level.

Moreover, if the object distance determination section 67 stores the focusing level characteristics in the first and second imaging modes as shown in Fig. 17, it can obtain a specific distance to the iris as the object based on the focusing level of the image obtained in the first imaging mode and the focusing level of the image obtained in the second imaging mode.

For example, when the focusing level of the image obtained in the first imaging mode is a2, the distance to the iris is L2 or L7. When the distance to the iris is L2, a focusing level of a lower iris image that is the image obtained in the second imaging mode is a3 which is high compared with a focusing level of an upper iris image. When the distance to the iris is L7, the focusing level of the lower iris image is a1 which is low compared with the focusing level of the upper iris image. In this way, whether the distance to the iris is L2 or L7 is known based on the difference in focusing level between the upper iris image and the lower iris image.

When the focusing level of the upper iris image is a2, and the focusing level of the lower iris image is a3, the object distance determination section 67 can determine the distance to the iris as L2 based on the stored focusing level characteristics; and when the focusing level of the upper iris image is a2, and the focusing level of the lower iris image is a1, it can determine the distance to the iris as L7. In this way, the object distance determination section 67 can determine the distance to the iris based on respective focusing level characteristics in the first imaging mode and the second imaging mode and the focusing levels of the images taken in respective imaging modes.

Furthermore, the object distance determination section 67 operates to output a signal for leading a person to be imaged to be closer to the camera (closing-lead-signal), a signal for leading the person to be distanced from the camera (distancing-lead-signal), a signal showing that a position of the iris is appropriate (lead-unnecessary-signal), or a signal showing that a determination result is not known (indetermination signal) to the lead guidance section 68 based on the determination result of the distance to the iris and the focusing level outputted from the focusing determination section 66.

When the result of the focusing determination from the focusing determination section 66 shows that the focusing level of the iris image taken in either of imaging modes is lower than a threshold value, that is, when the iris is determined to be not situated within the expanded focusing range 19, the object distance determination section 67 determines whether the iris is situated on this side or at the back side of the expanded focusing range 19, and outputs the closing-lead-signal or the distancing-lead-signal.

Specifically, when the focusing level of the iris image taken in either of imaging modes is lower than the threshold value, and the focusing level of the iris image taken in the first imaging mode is higher than the focusing level of the iris image taken in the second imaging mode, the object distance determination section 67 determines that the iris is situated in a position that is outside the expanded focusing range 19 and more distant than the center L4 of the expanded focusing range 19, that is, situated in a position more distant than the most distant end L6 of the expanded focusing range. In this case, the object distance determination section 67 outputs the closing-lead-signal. When the focusing level of the iris image taken in either of imaging modes is lower than the threshold value, and the focusing level of the iris image taken in the first imaging mode is lower than the focusing level of the iris image taken in the second imaging mode, the section 67 determines that the iris is situated in a position that is outside the expanded focusing range 19 and nearer than the center L4 of the expanded focusing range 19, that is, situated in a position nearer than the nearest end L1 of the expanded focusing range 19. In this case, the object distance determination section 67 outputs the distancing-lead-signal.

Moreover, when the result of the focusing determination in the focusing determination section 66 shows that the focusing level of the iris image taken in either of imaging modes is higher than the threshold value, that is, when the iris is determined to be situated within the expanded focusing range 19, the object distance determination section 67 outputs the lead-unnecessary-signal. When the distance to the object is not known, the object distance determination section 67 outputs the indetermination signal.

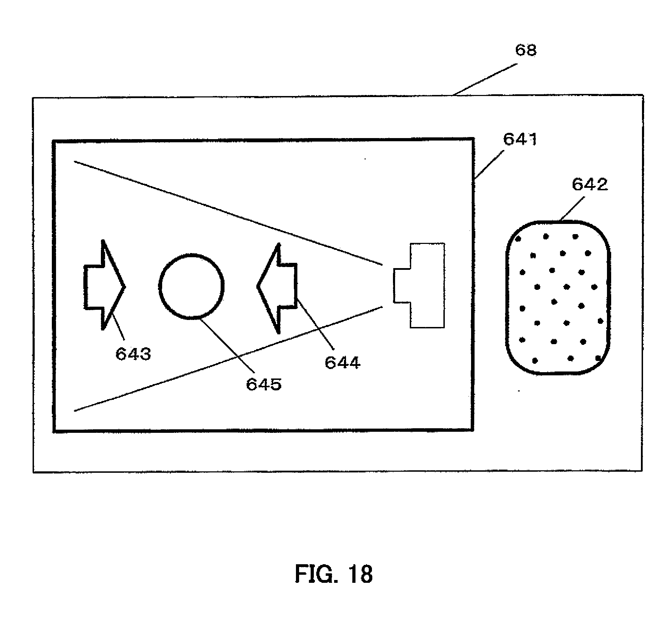

Fig. 18 is a view showing a configuration of the lead guidance section 68. The lead guidance section 68 includes a display section 641 and a voice output section 642. The display section 641 includes a closing-lead-lamp 643 for leading a person to be imaged to be closer to the iris image pickup camera 100, distancing-lead-lamp 644 for leading the person to be distanced from the iris image pickup camera 100, and an excellence lamp 645 indicating that the distance to the iris is appropriate.

The lead guidance section 68 operates to turn on the closing-lead-lamp 643, distancing-lead-lamp 644, and an excellence lamp 645 according to the closing-lead-signal, distancing-lead-signal, and lead-unnecessary-signal outputted from the object distance determination section 67. The lead guidance section 68 does not turn on any of lamps when it receives the indetermination signal from the object distance determination section 67.

Moreover, the lead guidance section 68 stores voice guide for leading a person to be imaged to be closer to the iris image pickup camera 100, voice guide for leading the person to be distanced from the iris image pickup camera 100, and voice guide indicating that a position of the iris is appropriate according to the closing-lead-signal, distancing-lead-signal, and lead-unnecessary-signal. The lead guidance section 68 has function to receive the closing-lead-signal, distancing-lead-signal, and lead-unnecessary-signal from the object distance determination section 67, and output voice guide according to them from the voice output section 642. The lead guidance section 68 does not output any voice guide when it receives the indetermination signal from the object distance determination section 67.

Return to Fig. 16, and the switching control section 65 has function that when the result of the focusing determination outputted from the focusing determination section 66 shows that the focusing level of the iris image is lower than the threshold value, it outputs a switching control signal for moving the shielding plates 14 and 15 according to the determination result.

The iris database 63 stores an iris image of a registrant. The iris authentication processing section 62 operates to load an iris image having a focusing level higher than the threshold value from the image capture 61 as image data for iris authentication and performs iris authentication according to the result of the focusing determination outputted from the focusing determination section 66. The iris authentication processing section 62 operates to output an authentication result to the authentication result output section 64. The iris authentication processing section 62 extracts an iris portion included in the image data, and compares it with the iris image stored in the iris database 63, thereby performs authentication of the iris.

The authentication result output section 64 outputs an authentication result signal (authentication success signal or authentication failure signal) according to the authentication result outputted from the iris authentication processing section 62. When the iris authentication system 7 is used, for example, for the in/out room management system, the authentication result signal is a control signal for unlocking or locking a door. When the iris authentication device 60 is added with an information device such as a monitor to notify the authentication result to a person to be authenticated, the authentication result signal is used for an information signal of the authentication result.

In the iris authentication system 7, the iris image pickup camera 100 and the iris authentication device 60 may be integrally configured, or may be separately configured. When the two devices are separately configured, the iris authentication device 60 may be configured by installing software into a general-purpose computer.

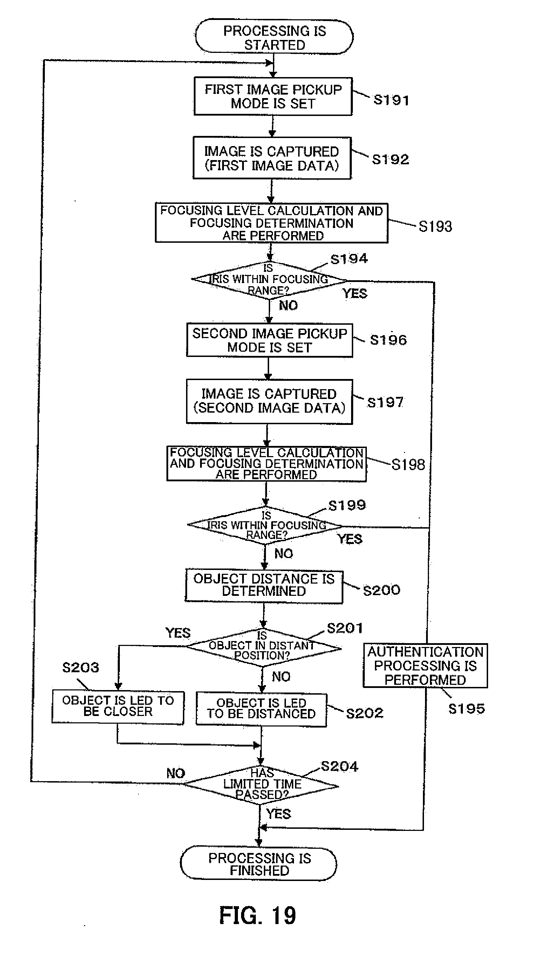

For the iris authentication system 7 configured as above, operation is described using Fig. 19. First, the shielding plates 14 is positioned in the withdrawal position and the shielding plate 15 is positioned in the shielding position by the switching section 16, and the iris image pickup camera 100 is set in the first imaging mode (step S191). The iris image pickup camera 100 takes an image of the iris in the first imaging mode, and image data are generated in the image processing section 13.

Next, the image capture section 61 of the iris authentication device 60 loads the image data (first image data) of the iris image taken in the first imaging mode from the image processing section 13, and then outputs the data to the focusing determination section 66 (step S192). The focusing determination section 66 calculates a focusing level of the iris image, and thus performs focusing determination (step S193). At that time, the focusing determination section 66 outputs the calculated focusing level to the object distance determination section 67, and outputs a result of the focusing determination to the object distance determination section 67 and the iris authentication processing section 62. Then, the iris authentication processing section 62 determines whether the focusing level is higher than the threshold value as a result of the focusing determination in the focusing determination section 66, that is, whether the iris is within the focusing range in the first imaging mode or not is determined (step S194), and when the focusing level is higher than the threshold value, that is, an iris image in focus is obtained in the first imaging mode (YES in step S194), the iris authentication processing section 62 loads the first image data from the image capture section 61 and performs authentication processing (step S195).

When the focusing level is determined to be lower than the threshold value as a result of the focusing determination in the focusing determination section 66, that is, when the iris image in focus is not obtained in the first imaging mode (NO in step S194), the focusing determination section 66 outputs the result to the switching control section 65. Then, the switching control section 65 outputs a switching control signal to the switching section 16 of the iris image pickup camera 100 according to the determination result. The switching section 16 moves the shielding plates 14 and 15 according to the switching control signal to switch the imaging mode of the iris image pickup camera 100 to the second imaging mode (step S196). Then, the iris image pickup camera 100 takes an image of the iris in the second imaging mode, and then generates image data in the image processing section 13. At that time, the focusing level and the result of focusing determination are outputted from the focusing determination section 66 to the object distance determination section 67.

The image capture section 61 loads the image data (second image data) of the iris image taken in the second imaging mode from the image processing section 13, and then outputs the data to the focusing determination section 66 (step S197). The focusing determination section 66 calculates a focusing level of the iris image, and thus performs focusing determination (step S198). At that time, the focusing determination section 66 outputs the calculated focusing level to the object distance determination section 67, and outputs a result of the focusing determination to the object distance determination section 67 and the iris authentication processing section 62. Then, the iris authentication processing section 62 determines whether the focusing level is higher than the threshold value as a result of the focusing determination in the focusing determination section 66, that is, whether the iris is within the focusing range in the second imaging mode or not is determined (step S199), and when the focusing level is higher than the threshold value, that is, an iris image in focus is obtained in the second imaging mode (YES in step S199), the iris authentication processing section 62 loads the image data from the image capture section 61 to perform authentication processing (step S195).

When both of the first image data and the second image data are lower than the threshold value, that is, the iris is not within the expanded focusing range (NO in step S199), the object distance determination section 67 determines the distance to the iris (step S200), and determines whether the determined distance to the object is more distant than the most distant end of the expanded focusing range, or nearer than the nearest end of the expanded focusing range (step S201).

When the distance to the iris is nearer than the nearest end of the expanded focusing range (NO in step S201), the object distance determination section 67 outputs the distancing-lead-signal to the lead guidance section 68. Then, according to the distancing-lead-signal, the lead guidance section 68 turns on the distancing-lead-lamp 644, and outputs the voice guide from the voice output section 642 to the person to be imaged, the voice guide being for leading the person to be distanced from the iris image pickup camera 100 (step 5202).

When the distance to the iris is more distant than the most distant end of the expanded focusing range (YES in step S201), the object distance determination section 67 outputs the closing-lead-signal to the lead guidance section 68. Then, according to the closing-lead-signal, the lead guidance section 68 turns on the closing-lead-lamp 643, and outputs the voice guide from the voice output section 642 to the person to be imaged, the voice guide being for leading the person to be closer to the iris image pickup camera 100 (step S203).

Following the step S202 or the step S203, whether predetermined limited time has passed from the beginning of processing is determined (step S204). In the case that the limited time has still not passed (NO in step S204), procedure is returned to the step S191, and in the case that the limited time has passed (YES in step S204), processing is finished without performing the authentication processing.

According to such an iris authentication system 7 of the seventh embodiment of the invention, since the distance to the object is determined based on the difference in focusing level between the iris images taken in respective first and second imaging modes having the different focusing level characteristics, the person to be imaged is led to an appropriate position based on the determined distance, and consequently an iris image with a high focusing level can be obtained.

Moreover, the iris image pickup camera 100 has the focusing ranges that are displaced from each other on the common light axis, and if the iris as the object is situated in one of the plurality of focusing ranges, the iris image in focus is obtained, therefore the iris image in focus is obtained in a wide range of the distance to the iris in a simple configuration without having the automatic focusing function.

(Eighth Embodiment)

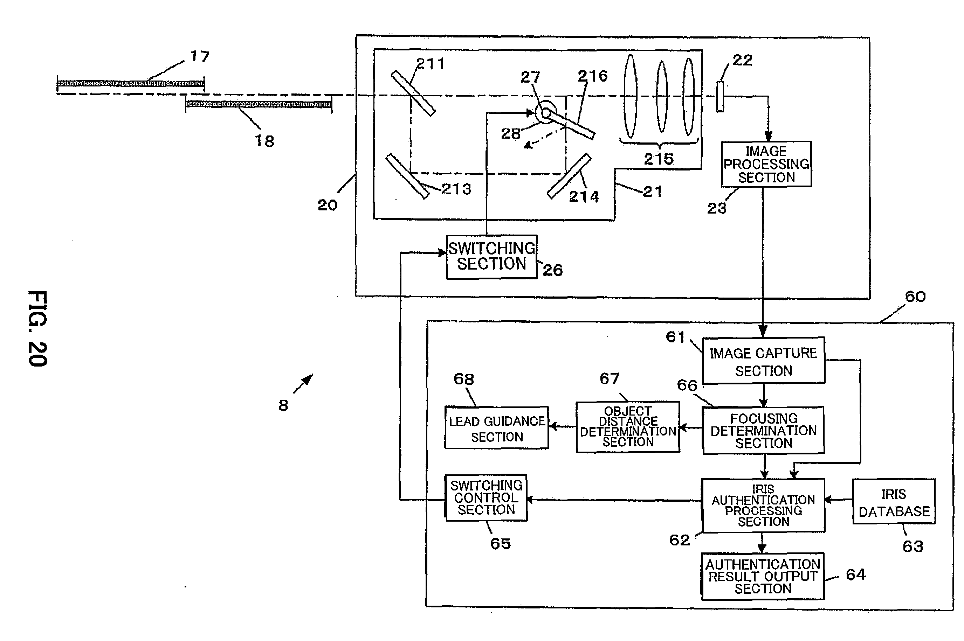

Next, the iris authentication system 8 of an eighth embodiment of the invention is shown in Fig. 20. The iris authentication system 8 of the embodiment is a modification of the seventh embodiment, and the iris image pickup camera 20 includes a rotational mirror 216 instead of the half mirror 112 in the seventh embodiment. Since a configuration of an iris authentication device 60 is the same as in the seventh embodiment, description is omitted.

The iris image pickup camera 20 further includes a spindle 27 to which the rotational mirror 216 is fixed and a motor 28 for rotating the spindle 27. In the iris image pickup camera 20, a half mirror 211 and a lens group 215 configure a first branch optical system, and the half mirror 211, a mirror 213, a mirror 214, the rotational mirror 216 and the lens group 215 configure a second branch optical system. The rotational mirror 216 is provided near a junction of the first and second branch light axes. The rotational mirror 216 selectively activates the first or second branch light path by changing an angle by rotation.

Fig. 20 shows a state where a first branch light path in the first branch optical system is activated by the rotational mirror 216. In this state, since the rotational mirror 216 is withdrawn in a position where the first branch light path is not shielded, light from the iris passes through the first branch light path, that is, it is transmitted through the half mirror 211 and the lens group 215 , and then projected to an imaging element 22. Light that has traveled along the second branch light path is reflected in a direction different from a direction toward the lens group 215 by a reflective surface of the rotational mirror 216. Therefore, the light does not reach the imaging element 22 through the lens group 215.

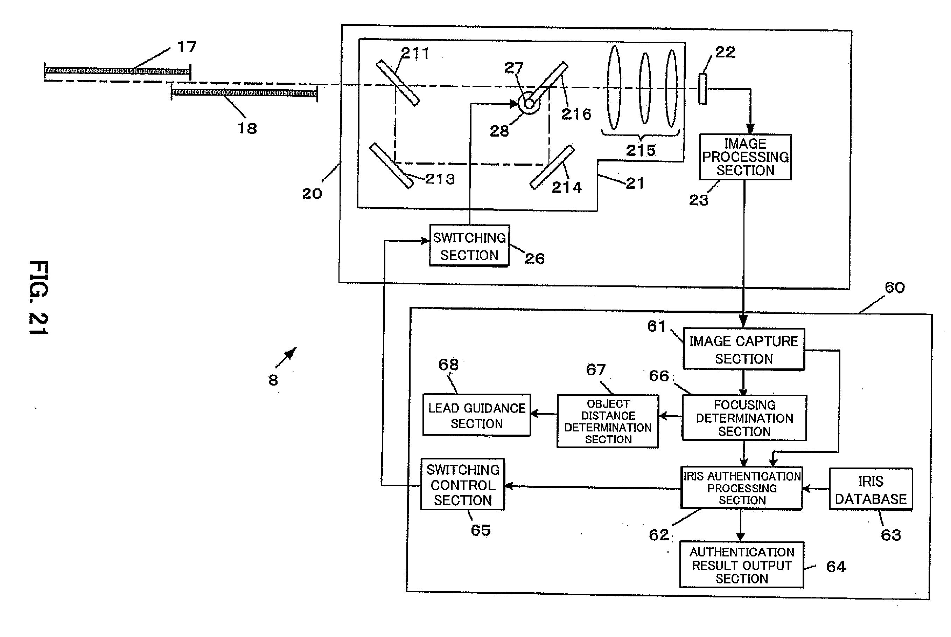

Fig. 21 shows a state where the second branch light path is activated. In this state, the light from the iris passes through the second branch light path, that is, it is reflected by the half mirror 211, mirror 213, and mirror 214, and then reflected on the reflective surface of the rotational mirror 216 at the junction of the first and second branch light axes and thus injected into the lens group 215, and then projected to the imaging element 22. Light that has traveled along the first branch light path is shielded by a back face of the rotational mirror 216, and consequently not injected into the lens group 215.

In this way, the rotational mirror 216 is rotated between an angle at which the first branch light path is activated (first light path activation angle) and an angle at which the second branch light path is activated (second light path activation angle). When the rotational mirror 216 is at the first light path activation angle, the iris image pickup camera 20 is in the first imaging mode, and when the rotational mirror 216 is at the second light path activation angle, it is in the second imaging mode. Rotational operation of the rotational mirror 216 is performed by controlling a motor 28 by a switching section 26. The switching section 26 receives a switching control signal from the switching control section 65 of the iris authentication device 60, and controls the motor 28 according to the switching control signal.

Again in the embodiment, the focusing level characteristics depending on the distance to the iris as the object are shifted between the first and second imaging modes, and the iris image pickup camera 20 has a plurality of imaging modes having the different focusing level characteristics depending on the distance to the iris.

When the iris image pickup camera 20 is in the second imaging modes, that is, when the rotational mirror 216 is at the second light path activation angle as shown in Fig. 21, imaging may be performed multiple times by slightly changing an angle of the rotational mirror 216. Thus, vertically displaced ranges can be imaged, and consequently ranges where the iris can be imaged can be expanded in a vertical direction.

The iris authentication system 8 configured as above operates similarly as in the seventh embodiment. However, setting of the first imaging mode in the step S191 and setting of the second imaging mode in the step S196 are performed by driving the motor 28 by the switching section 26. That is, the switching section 26 drives the motor 28 so that the rotational mirror 216 is set to be at the first light path activation angle, thereby the first imaging mode is set, or the switching section 26 drives the motor 28 so that the rotational mirror 216 is set to be at the second light path activation angle, thereby the second imaging mode is set.

According to such an iris authentication system 8 of the eighth embodiment of the invention, since the distance to the object is determined based on the difference in focusing level between the iris images taken in respective first and second imaging modes having the different focusing level characteristics, the person to be imaged is led to an appropriate position based on the determined distance, and consequently an iris image with a high focusing level can be obtained.

Moreover, the iris image pickup camera 100 has the focusing ranges that are displaced from each other on the common light axis, and if the iris as the object is situated in one of the plurality of focusing ranges, the iris image in focus is obtained, therefore the iris image in focus is obtained in a wide range of the distance to the iris in a simple configuration without having the automatic focusing function.

(Ninth Embodiment)

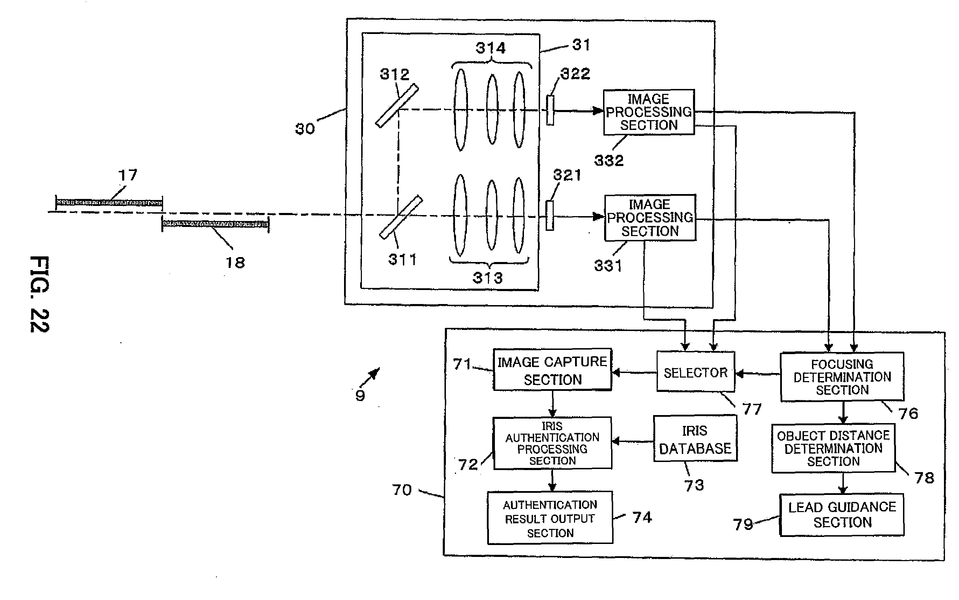

Next, an iris authentication system 9 of a ninth embodiment of the invention is shown in Fig. 22. An iris image pickup camera 30 of the embodiment includes an imaging optical system 31, a first imaging element 321, a second imaging element 322, a first image processing section 331, and a second mage processing section 332.

The imaging optical system 31 is configured by a half mirror 311, mirror 312, first lens group 313, and second lens group 314. The half mirrors 311 is disposed on an extension line of a light axis of the first lens group 313, and held in such a direction that part of injected light from an object side is reflected upward. The mirror 312 is disposed on an extension line of a light axis of the second lens group 314 and in such a position above the half mirror 311, and held in such a direction that reflected light from the half mirror 311 is reflected toward the second lens group 314.

The half mirror 311, mirror 312, first lens groups 313 and second lens groups 314 are disposed such that a distance between the half mirror 311 and the first lens group 313 is equal to a distance between the mirror 312 and the second lens group 314. The first lens group 313 is in the same configuration as in the second lens groups 314.

The first imaging element 321 and the second imaging element 322 are solid-state imaging elements that perform photoelectric conversion of the projected iris images and thus output electric signals. The first image processing section 331 and the second image processing section 332 operates to perform processing such as A/D conversion of the electric signals outputted from the first imaging element 321 and the second imaging element 322 to generate image data, respectively.

In the embodiment, the half mirror 311 and the first lens group 313 configure a first branch optical system, and the half mirror 311, mirror 312, and second lens group 314 configure a second branch optical system. A position of the half mirror 311 is a branch point of light axes of the two branch optical systems. The imaging optical system 31 has a common light axis outside of the iris image pickup camera 30.

The first branch optical system is configured such that light from an iris situated on the common light axis passes through a first branch light path to the first imaging element 321 through the half mirror 311 and the first lens group 313. The second branch optical system is configured such that light from the iris situated on the common light axis passes through a second branch light path to the second imaging element 322 through the half mirror 311, mirror 312 and the second lens group 314. When the first branch light path and the second branch light path are compared, the second branch light path is longer than the first branch light path by a distance between the half mirror 311 and the mirror 312.

The iris image pickup camera 30 has first and second imaging modes, and takes an iris image in each of the imaging modes, similarly as the seventh embodiment. That is, a state where the iris image is formed by the first imaging element 321 in the first branch optical system is the first imaging mode, and a state where the iris image is formed by the second imaging element 322 in the second branch optical system is the second imaging mode.

As above, in the imaging optical system 31 of the embodiment, since the first and second lens groups 313 and 314 are in the same configuration, displacement between the focusing ranges 17 and 18 of the first and second branch light paths is equal to the difference in length between the first branch light path and the second branch light path in the imaging optical system 31. In the embodiment, since a distance between the half mirror 311 and the first lens group 313 is equal to a distance between the mirror 312 and the second lens group 314, the difference in length between the two branch light paths is essentially corresponding to the distance between the half mirror 311 and the mirror 312.

In the embodiment, the imaging optical system 31 is designed such that the difference in length between the two branch light paths is equal to depth of each of the focusing ranges 17 and 18, thereby the focusing range in the first imaging mode is adjacent to the focusing range in the second imaging mode without being overlapped, and an image is in focus in one of the imaging modes in all regions of the expanded focusing range.

An iris authentication device 70 includes an image capture section 71, a focusing determination section 76, and a selector 77. The focusing determination section 76 is connected to both of the two image processing sections 331 and 332 of the iris image pickup camera 30. The focusing determination section 76 operates to calculate a focusing level of image data outputted from each of the image processing sections 331 and 332, and thus to perform focusing determination. The focusing determination section 76 outputs the calculated focusing level and a result of the focusing determination to an object distance determination section 78. Moreover, the focusing determination section 76 operates to output the result of the focusing determination to the selector 77.

The selector 77 is also connected to both of the two image processing sections 331 and 332 of the iris image pickup camera 30, and inputted with the image data from the image processing sections 331 and 332. The selector 77 operates to output image data in focus to the image capture section 71 according to the result of the focusing determination outputted from the focusing determination section 76. The image capture section 71 operates to load the image data in focus selected by the selector 77 as image data for iris authentication, and to output the data to an iris authentication processing section 72.

The iris authentication device 70 includes the object distance determination section 78, a lead guidance section 79, the iris authentication processing section 72, an iris database 73, and an authentication result output section 74. Since configurations of them are the same as in the iris authentication device 60 in the seventh embodiment, description is omitted.

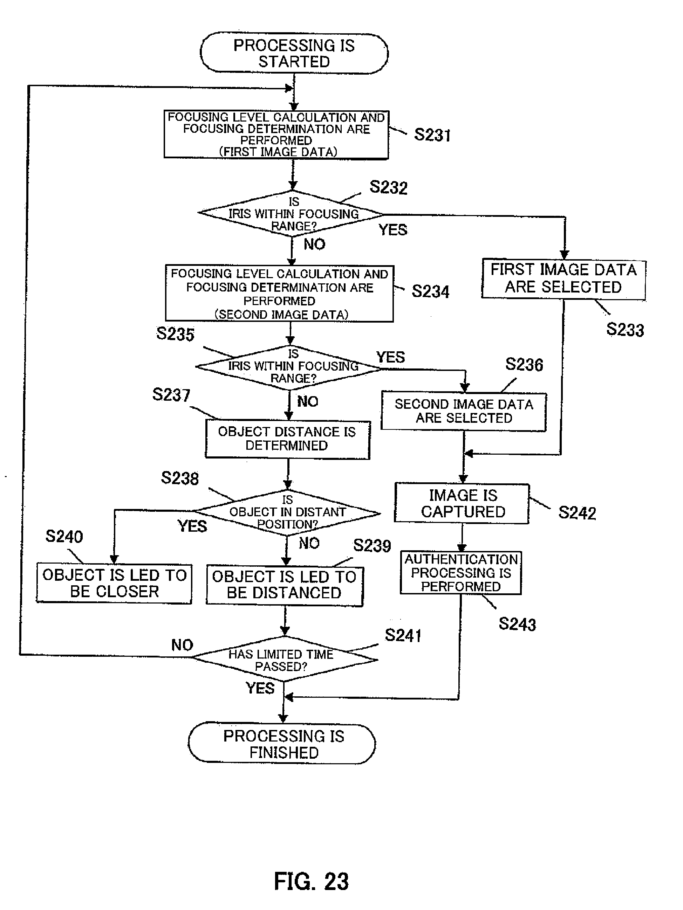

For the iris authentication system 9 configured as above, operation is described using Fig. 23. First, the first and second image processing sections 331 and 332 output image data to the focusing determination section 76 respectively. Then, the focusing determination section 76 first calculates the focusing level of the image data (first image data) outputted from the image processing section 331, and performs focusing determination (step S231). Then, whether the focusing level is higher than a threshold value as a result of the focusing determination in the focusing determination section 76, that is, whether the iris is within the focusing range in the first imaging mode or not is determined (step S232), and when the image data outputted from the image processing section 331 has a focusing level equal to the threshold value or more (YES in step S232), the section 76 outputs a determination result to the selector 77, the result indicating that the first image data are to be selected (step S233).

On the other hand, when the focusing level is lower than the threshold value in the focusing determination in the step S232, that is, when the iris image in focus is not obtained in imaging in the first imaging mode (NO in step S232), the section 76 calculates a focusing level of the image data (second image data) outputted from the second image processing section 332 (step S234). Then, the focusing determination section 76 performs focusing determination on the image data (step S235), and when the focusing level is equal to the threshold value or more (YES in step S235), the section 76 outputs a determination result to the selector 77, the result indicating that the image data are to be selected (step S236).

When the first image data are selected in the step S233, or the second image data are selected in the step S236, the image capture section 71 loads the selected image data from the selector 77, and outputs the data to the iris authentication processing section 72 (step S242). The iris authentication processing section 72 performs iris authentication using the image data outputted from the image capture section 71 (step S243), and then processing is finished.

When the focusing level of the second image data is also lower than the threshold value like the first image data, that is, the iris is not within the expanded focusing range (NO in the step S235), the object distance determination section 78 determines the distance to the iris (step S237), and determines whether the determined distance to the object is more distant than the most distant end of the expanded focusing range, or nearer than the nearest end of the expanded focusing range (step S238).

When the distance to the object is nearer than the nearest end of the expanded focusing range (NO in step S238), the object distance determination section 78 outputs a distancing-lead-signal to the lead guidance section 79. Then, according to the distancing-lead-signal, the lead guidance section 79 turns on a distancing-lead-lamp, and outputs voice guide from a voice output section to a person to be imaged, the voice guide being for leading the person to be distanced from the iris image pickup camera 30 (step S239).

When the distance to the object is more distant than the most distant end of the expanded focusing range (YES in step S238), the object distance determination section 78 outputs a closing-lead-signal to the lead guidance section 79. Then, according to the closing-lead-signal, the lead guidance section 79 turns on a closing-lead-lamp, and outputs voice guide from the voice output section to the person to be imaged, the voice guide being for leading the person so as to be closer to the iris image pickup camera 30 (step S240).

Following the step S239 or the step S240, whether predetermined limited time has passed from the beginning of processing is determined (step S241). In the case that the limited time has still not passed (NO in step S241), procedure is returned to the step S231, and in the case that the limited time has passed (YES in step S241), the processing is finished without performing authentication processing.

According to such an iris image pickup camera 30 of the ninth embodiment of the invention, similarly as in the seventh embodiment, since the distance to the object is determined based on the difference in focusing level between the iris images taken in respective first and second imaging modes having the different focusing level characteristics, the person to be imaged can be led to an appropriate position based on the determined distance.

Furthermore, similarly as in the seventh embodiment, the iris image pickup camera 30 has the focusing ranges that are displaced from each other on the common light axis, and if the iris as the object is situated in one of the first and second focusing ranges, the iris image in focus is obtained, therefore the iris image in focus is obtained in a wide range of the distance to the iris in a simple configuration without having the automatic focusing function.

(Tenth Embodiment)

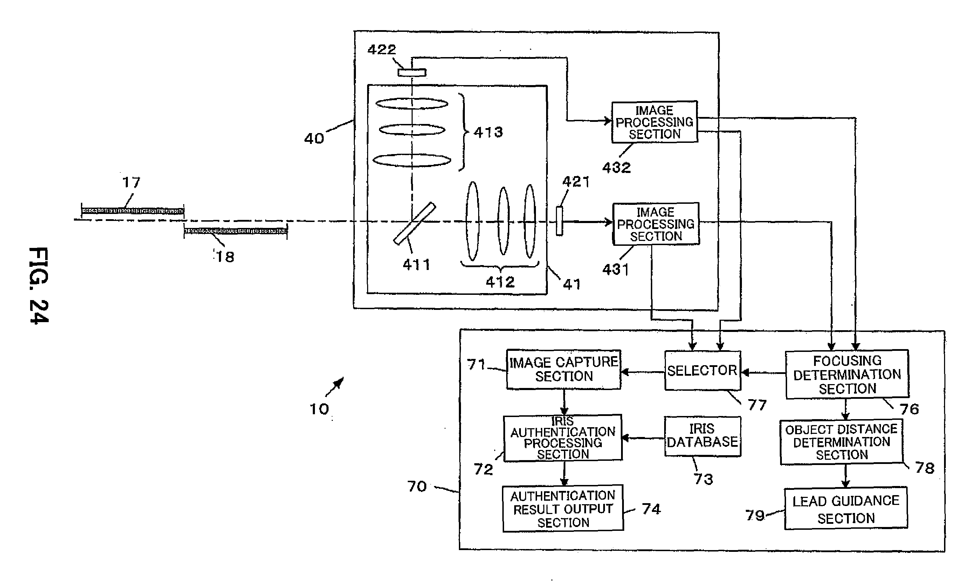

Next, the iris authentication system 10 of a tenth embodiment of the invention is shown in Fig. 24. The iris authentication system 10 of the embodiment is a modification of the ninth embodiment, wherein a configuration of an imaging optical system 41 of an iris authentication camera 40 is different from that in the ninth embodiment. Since a configuration of an iris authentication device 70 is the same as in the ninth embodiment, description is omitted.

The imaging optical system 41 in the embodiment is configured by a half mirror 411, first lens group 412, and second lens group 413. The first lens group 412 and the second lens group 413 are disposed in a manner that light axes of them are perpendicular to each other. The half mirror 411 is disposed at an intersection of the two light axes, and held in such a direction that part of injected light is reflected from an object side to the second lens group 413. The first lens group 412 and the second lens group 413 are disposed such that respective distances to the intersection of the light axes, or respective distances to the half mirror 411 are the same.

In the first lens group 412 and the second lens group 413, distances to respective focusing ranges 17 and 18 are different, and the focusing range 17 of the first lens group 412 is more distant than the focusing range 18 of the second lens group 413. Moreover, the two lens groups 412 and 413 are different in depth of the focusing ranges, and the focusing range 17 of the first lens group 412 is shallower than the focusing range 18 of the second lens group 413. Furthermore, the two lens groups 412 and 413 are different in magnification, and similarly as in the seventh embodiment, they are set such that an iris image of an iris situated in the most distant end of each of the focusing ranges is larger than a minimum size at which the iris can be authenticated, and an iris image of an iris situated in the nearest end of each of the focusing ranges is smaller than a maximum size that can be handled in the iris authentication processing.

In the iris image pickup camera 40, the half mirror 411 and the first lens group 412 configure a first branch optical system, and the half mirror 411 and the second lens group 413 configure a second branch optical system. A position of the half mirror 411 is a branch point of light axes of the two branch optical systems. The imaging optical system 41 has a common light axis outside of the iris image pickup camera 40.

The first imaging element 421 and the second imaging element 422 are solid-state imaging elements that perform photoelectric conversion of the projected iris images and thus output electric signals. The first image processing section 431 and the second image processing section 432 operate to perform processing such as A/D conversion of the electric signals outputted from the first imaging element 421 and the second imaging element 422 to generate image data, respectively.

The iris image pickup camera 40 has first and second imaging modes, and takes an image of an iris as an object in each of the imaging modes, similarly as in the ninth embodiment. That is, a state where the iris image is formed by the first imaging element 421 in the first branch optical system is the first imaging mode, and a state where the iris image is formed by the second imaging element 422 in the second branch optical system is the second imaging mode. Again in the embodiment, the focusing level characteristics depending on the distance to the iris as the object are shifted between the first imaging mode and the second imaging mode, and the iris image pickup camera 40 has a plurality of imaging modes having the different focusing level characteristics depending on the distance to the iris.

The iris authentication system 10 configured as above operates similarly as in the ninth embodiment.

According to such an iris image pickup camera 40 of the tenth embodiment of the invention, similarly as in the seventh embodiment, since the distance to the object is determined based on the difference in focusing level between the iris images taken in respective first and second imaging modes having the different focusing level characteristics, the person to be imaged can be led to an appropriate position based on the determined distance.

Furthermore, similarly as in the seventh embodiment, the iris image pickup camera 40 has the focusing ranges that are displaced from each other on the common light axis, and if the iris as the object is situated in one of the first and second focusing ranges, the iris image in focus is obtained, therefore the iris image in focus is obtained in a wide range of the distance to the iris in a simple configuration without having the automatic focusing function.

(Eleventh Embodiment)

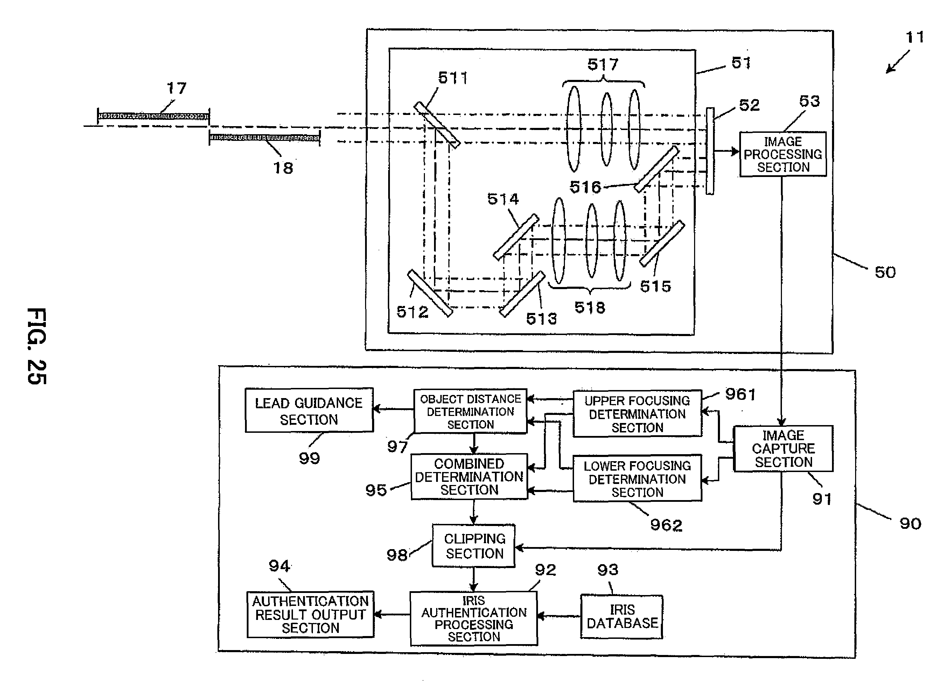

Next, an iris authentication system 11 of an eleventh embodiment of the invention is shown in Fig. 25. An iris image pickup camera 50 of the embodiment includes an imaging optical system 51, imaging element 52, and image processing section 53.

The imaging optical system 51 is configured by a half mirror 511, mirrors 512 to 516, a first lens group 517, and a second lens group 518. The first lens group 517 and the second lens group 518 are in the same configuration, which are groups of fixed focal length lenses the focusing ranges of which are in the same depth. The first and second lens groups 517 and 518 are disposed such that light axes of them are parallel to each other.

The half mirror 511 is disposed on an extension line of a light axis of the first lens group 517, and held in such a direction that part of injected light from an object side is reflected downward. The imaging element 52 is disposed such that an iris image formed by the first lens group 517 is projected to an upper region of the element. The mirrors 512 to 514 are disposed such that light reflected by the half mirror 511 is reflected in turn by the mirrors and thus injected into the second lens group 518. The mirrors 515 and 516 are disposed such that light transmitted through the second lens group 518 is reflected in turn by the mirrors and thus projected to a lower region of the imaging element 52 in a direction parallel to the light axis of the second lens group 518.

The imaging element 52 is configured by a solid-state imaging element that converts an iris image projected on an image surface into an electric signal. The image processing section 53 operate to perform processing such as A/D conversion to the electric signal outputted from the imaging element 52 to generate image data of the iris image.

In the embodiment, the half mirror 511 and the first lens group 517 configure a first branch optical system, and the half mirror 511, mirrors 512 to 516, and second lens group 518 configure a second branch optical system. A position of the half mirror 511 is a branch point of light axes of the two branch optical systems. The imaging optical system 51 has a common light axis outside of the iris image pickup camera 50.

The first branch optical system is configured such that light from an iris situated on the common light axis passes through a first branch light path to the upper region of the imaging element 52 through the half mirror 511 and the first lens group 517. The second branch optical system is configured such that light from the iris situated on the common light axis passes through a second branch light path to the lower region of the imaging element 52 through the half mirror 311, mirrors 512 to 514, second lens group 518, and mirrors 515 and 516.

The iris image pickup camera 50 configured as above has first and second imaging modes, and takes an image of an iris as an object in each of the imaging modes. That is, a state where the light from the iris passes through the first branch light path, and the iris image is formed by the imaging element 52 is the first imaging mode, and a state where the light from the iris passes through the second branch light path, and the iris image is formed by the imaging element 52 is the second imaging mode. In the embodiment, the iris image pickup camera 50 takes the iris image in the first imaging mode and takes the iris image in the second imaging mode at the same time.

In the embodiment, the imaging optical system 51 is designed such that the difference in length between the first and second branch light paths is equal to depth of each of the focusing ranges of the first and second branch optical systems, thereby the focusing range in the first imaging mode is adjacent to the focusing range in the second imaging mode without being overlapped, and an image is in focus in one of imaging modes in all regions of the expanded focusing range.

Image data acquired by the iris image pickup camera 50 in the embodiment is the same as the image data acquired by the iris image pickup camera 50 in the fifth embodiment. Fig. 13 is a view showing image data acquired by the iris image pickup camera 50 in the embodiment. In the embodiment, since the expanded focusing range is formed in a manner that the focusing range 17 of the first imaging mode and the focusing range 18 of the second imaging mode are continued as described above, when the iris as the object is within the expanded focusing range, an iris image in focus is obtained in one of the upper and lower regions of image data, and an iris image in defocus is obtained in the other region. In an example of Fig. 13, image data are shown, which are obtained when the iris as the object is situated within the focusing range 17 of the first imaging mode. The upper region of the image data is the iris image in focus, and the lower region is the iris image in defocus.

Return to Fig. 25, and the iris authentication device 90 of the embodiment includes an upper focusing level determination section 961, a lower focusing level determination section 962, a combined determination section 95, and a clipping section 89. The upper focusing level determination section 961 and the lower focusing level determination section 962 operate to calculate focusing levels of images in upper and lower regions of the image data (upper iris image and lower iris image) by using image data outputted from an image capture section 91, and output them to an object distance determination section 97, respectively. Furthermore, each of the upper focusing level determination section 961 and the lower focusing level determination section 962 operates to perform focusing determination by comparing the calculated focusing level with a previously stored threshold value, and then output a result of the focusing level determination to the object distance determination section 97 and the combined determination section 95.

The object distance determination section 97 has function to receive the focusing levels of the upper iris image and the lower iris image from the upper focusing level determination section 961 and the lower focusing level determination section 962, and to determine a distance to the iris as the object based on the difference in focusing level between them. Furthermore, the object distance determination section 97 operates to output the closing-lead-signal, distancing-lead-signal, lead-unnecessary-signal, or indetermination signal to a lead guidance section 99 according to the determination result of the distance to the iris and the results of the focusing determination outputted from the upper focusing level determination section 961 and the lower focusing level determination section 962. The iris for outputting the signals is the same as in the seventh embodiment. When the object distance determination section 97 outputs the lead-unnecessary-signal to the lead guidance section 99, it also outputs the lead-unnecessary-signal to the combined determination section 95.

The combined determination section 95 has function that when it receives the lead-unnecessary-signal from the object distance determination section 97, according to this, it loads the results of the focusing determination from the upper focusing level determination section 961 and the lower focusing level determination section 962. In addition, the combined determination section 95 has function that when the upper region is determined to be the image in focus in the upper focusing level determination section 961, it outputs an upper clipping signal to the clipping section 98, and when the lower region is determined to be the image in focus in the lower focusing level determination section 962, it outputs a lower clipping signal to the clipping section 98. In the iris image pickup camera 50 in the embodiment, since the focusing range 17 in the first imaging mode and the focusing range 18 in the second imaging mode are adjacent to each other without being overlapped as described before, images in focus are not obtained in both of the upper and lower regions.

The clipping section 98 operates to clip an iris image from the upper or lower region of the image data outputted from the image capture section 91 upon receiving the upper clipping signal or the lower clipping signal, and to output it to the iris authentication processing section 92 as image data for iris authentication.

The iris authentication device 90 includes the lead guidance section 99, the iris authentication processing section 92, an iris database 93, and an authentication result output section 94. Since configurations of them are the same as in the iris authentication device 60 in the seventh embodiment, description is omitted.

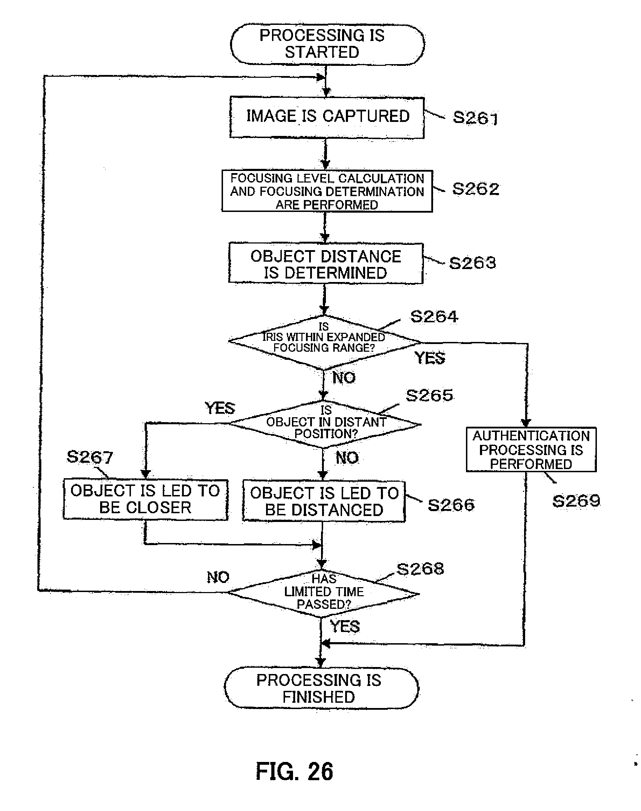

For an iris image pickup camera 50 configured as above, operation is described using Fig. 26. First, the image capture section 91 loads image data from the image processing section 53, and outputs the data to the upper focusing determination section 961 and the lower focusing determination section 962 (step S261). Then, the upper focusing determination section 961 and the lower focusing determination section 962 calculate focusing levels of an upper iris image and a lower iris image of the image data, and furthermore perform focusing determination, and then output the calculated focusing levels and results of the focusing determination to the object distance determination section 97 (step S262).

The object distance determination section 97 determines a distance to an iris based on the difference between focusing levels of the upper iris image and the lower iris image calculated by the upper focusing determination section 961 and the lower focusing determination section 962 (step S263), and determines whether the distance to the iris is within the expanded focusing range or not based on the results of the focusing determination of the upper focusing determination section 961 and the lower focusing determination section 962 (step S264). When the iris is not within the expanded focusing range (NO in step S264), the object distance determination section 97 determines whether the distance to the iris is more distant than the most distant end of the expanded focusing range, or nearer than the nearest end of the expanded focusing range (step S265).

In the case that the distance to the iris is nearer than the nearest end of the expanded focusing range (NO in step S265), the object distance determination section 97 outputs a distancing-lead-signal to the lead guidance section 99. Then, the lead guidance section 99 turns on a distancing-lead-lamp according to the distancing-lead-signal, and outputs voice guide from a voice output section to a person to be imaged, the voice guide being for leading the person to be distanced from the iris image pickup camera 50 (step S266).

In the case that the distance to the iris is more distant than the most distant end of the expanded focusing range (YES in step S265), the object distance determination section 97 outputs a closing-lead-signal to the lead guidance section 99. Then, the lead guidance section 99 turns on a elosing-lead-lamp according to the closing-lead-signal, and outputs voice guide from the voice output section to the person to be imaged, the voice guide being for leading the person so as to be closer to the iris image pickup camera 50 (step S267).

Following the step S266 and the step S227, whether predetermined limited time has passed from the beginning of processing is determined (step S268). When the limited time has still not passed (NO in step S268), procedure is returned to the step S261, and the image data acquired by the iris image pickup camera 50 is loaded again. Then, whether the iris is within the expanded focusing range or not is determined in the step S264 via calculation of the focusing level in the step S262 and determination of the object distance in the step S263. When the person to be imaged is moved according to the lead in the step S266 or the step S267, the iris of the person enters the expanded focusing range.

When the iris is determined to be within the expanded focusing range (YES in step S264), authentication processing is performed using the combined determination section 95, clipping section 98, iris authentication processing section 92, and iris database 93, and then an authentication result signal is outputted from the authentication result output section 94 (step S269), and then processing is finished. When the limited time has passed while the iris is not determined to be within the expanded focusing range (YES in step S268), the processing is finished without performing the authentication processing.

While a configuration where the first and second branch optical systems have the first and second lens groups 517 and 518 respectively, and images formed by the two lens groups are projected to the imaging element 52 was used in the above example, the invention is not limited to this. That is, a configuration may be used, in which the first and second branch optical systems have a common lens group, and light transmitted through the half mirror 511 is injected into an upper region of the common lens group, and light which is reflected by the half mirror 511 and then reflected by the mirrors 512 to 514 is injected into a lower region of the common lens group. If the depth of field of the common lens group is sufficiently large, in the imaging element provided behind the common lens group, an iris image formed through the first branch light path is projected to the upper region, and an iris image formed through the second branch light path is projected to the lower region, as shown in Fig. 13.

According to such an iris image pickup camera 50 of the eleventh embodiment of the invention, similarly as in the seventh embodiment, since the distance to the object is determined based on the difference in focusing level between the iris images taken in respective first and second imaging modes having the different focusing level characteristics, a person to be imaged can be led to an appropriate position based on the determined distance.

Furthermore, similarly as in the seventh embodiment, the iris image pickup camera 50 has the focusing ranges that are displaced from each other on the common light axis, and if the iris as the object is situated in one of the first and second focusing ranges, the iris image in focus is obtained, therefore the iris image in focus is obtained in a wide range of the distance to the iris in a simple configuration without having the automatic focusing function.

While an example where the iris image pickup camera has two, first and second imaging modes has been described in the above description, the iris image pickup camera may have three or more imaging modes.

Moreover, while an example where the camera of the invention is a camera for taking an image of an iris of a person for iris authentication has been described, the camera of the invention is not limited to this, the camera may be a typical one used for objects which are not particularly limited.

Furthermore, while an example has been described in the description, wherein the focusing level characteristics of the first and second modes are shifted in a degree of depth of each of the focusing ranges, and the focusing range of the first imaging mode is adjacent to the focusing range of the second imaging mode, the invention is not limited to this. That is, as long as focusing level characteristics depending on a distance to an object are different for each of a plurality of imaging modes, focusing levels of images taken in the imaging modes are different, and when difference between the focusing levels is used, the distance to the object can be determined as described before. Therefore, even if the focusing range of the first imaging mode is not adjacent to the focusing range of the second imaging mode, the distance to the object can be determined.

Industrial Applicability

As described hereinbefore, the imaging optical system has focusing ranges displaced from one another on the common axis, and when the iris as the object is situated in one of the plurality of focusing ranges, the iris image in focus is obtained, therefore the iris image pickup camera of the invention has an advantage that an iris image in focus in a wide range of the distance to the iris is promptly obtained in a simple configuration without having an automatic zoom function or an automatic focusing function, which is useful for an iris image pickup camera or the like for use in the in/out room management system and the like.

Moreover, since the camera according to the invention determines the distance to the object based on the difference in focusing level between the object images taken in respective multiple imaging modes having different focusing level characteristics, it has an advantage that it can take an image with a high focusing level using the determined distance, which is useful for an iris image pickup camera for taking an image of an iris for iris authentication.

**Claims**

1. An iris image pickup camera, comprising:

    imaging optical means that has a common light axis in a region where an iris is situated, and a plurality of branch light axes branched from the common light axis, and has a plurality of focusing ranges different from one another on the common light axis for each of a plurality of branch light paths, and
    imaging means for taking image data of a plurality of iris images formed through the plurality of branch light paths.

2. The iris image pickup camera according to claim 1, wherein the imaging optical means is configured such that the plurality of focusing ranges are adjacent to each, and when the iris is situated in all regions of the plurality of focusing ranges, an iris image having a size suitable for iris authentication is obtained.

3. The iris image pickup camera according to claim 1 or 2, wherein the imaging optical means has a junction of the branch light axes where the plurality of branch light axes join together, and the imaging means has an imaging element that takes image data of an iris image formed through the plurality of branch light paths in the junction of the branch light axes.

4. The iris image pickup camera according to claim 3, comprising;
shield means for selectively shielding the plurality of branch light paths.

5. The iris image pickup camera according to claim 3, comprising;
a mirror which is held in a manner that a direction of a reflective surface can be changed, and forms an iris image through one of the plurality of branch light paths by changing the direction of the reflective surface.

6. The iris image pickup camera according to claim 1 or 2, wherein the imaging means has a plurality of imaging elements that are disposed on the plurality of branch light axes, and take image data of a plurality of iris images formed through the plurality of branch light paths.

7. The iris image pickup camera according to claim 1 or 2, wherein the imaging means has an imaging element that takes image data of the plurality of iris images formed through the plurality of branch light paths, and
the imaging optical means is configured such that the plurality of iris images are projected to different regions in the imaging element.

8. An iris imaging system, comprising;
the iris image pickup camera according to any one of claims 1 to 7, and
iris authentication means that performs authentication of an iris using the image data of the iris image.

9. A camera, comprising;
image acquisition means that acquires object images taken in a plurality of imaging modes having different focusing level characteristics to an object, and
distance determination means that determines a distance to the object based on the difference in focusing level between the object images taken in the plurality of imaging modes.

10. The camera according to claim 9, comprising;
imaging optical means that has a common light axis in a region where the object is situated, and has a plurality of branch light axes branched from the common light axis, and has a plurality of focusing ranges different from one another on the common axis for each of branch light paths of the plurality of branch light axes,
wherein the plurality of imaging modes are imaging modes in which an object image is formed through the plurality of branch light paths, so that the object image is taken.

11. An iris image pickup camera, comprising;
iris image acquisition means that acquires iris images taken in a plurality of imaging modes having different focusing level characteristics to an iris, and
lead means that leads a person to be imaged such that the iris is in at least one of the plurality of focusing ranges, each of which is corresponding to each of the focusing level characteristics of the plurality of imaging modes, based on the difference in focusing level between the iris images acquired in the plurality of imaging modes.

12. The iris image pickup camera according to claim 11, wherein the plurality of focusing ranges are adjacently displaced in a back and forth direction, and
when a focusing level of a first iris image taken in an imaging mode corresponding to a focusing range on this side of the relevant device, which is an area where the iris is not within any of the plurality of focusing ranges, is higher than a focusing level of a second iris image taken in an imaging mode corresponding to a focusing range at a back side, the lead means leads the person to be imaged to be distanced from the device, and when the focusing level of the second iris image is higher than the focusing level of the first iris image, it leads the person to be closer to the device.

13. The iris image pickup camera according to claim 11 or 12, wherein the lead means leads the person to be imaged using at least one of display and voice.

FIG. 1

EP 1 696 382 A1

FIG. 2

EP 1 696 382 A1

FIG. 3A

FIG. 3B

FIG. 3C

FIG. 4

FIG. 5

FIG. 6

```
         ( PROCESSING IS STARTED )
                      │
                      ▼
    ┌─────────────────────────────┐   S71
    │  FIRST BRANCH LIGHT         │
    │  PATH IS ACTIVATED          │
    └─────────────────────────────┘
                      │
                      ▼
    ┌─────────────────────────────┐   S72
    │     IMAGE IS CAPTURED        │
    └─────────────────────────────┘
                      │
                      ▼
                 ◇ S73
            IS
       AUTHENTICATION ──────── YES ───────┐
         ACHIEVED?                        │
            │ NO                          │
            ▼                             │
    ┌─────────────────────────────┐  S75  │
    │  SECOND BRANCH LIGHT        │       │
    │  PATH IS ACTIVATED          │       │
    └─────────────────────────────┘       │
                      │                    │
                      ▼                    │
    ┌─────────────────────────────┐  S76  │
    │     IMAGE IS CAPTURED        │       │
    └─────────────────────────────┘       │
                      │                    │
                      ▼                    │
                 ◇ S77                     │
            IS                             │
       AUTHENTICATION ──────── YES ────────┤
         ACHIEVED?                         │
            │ NO                           │
            ▼                              │
           ◇ S78                          │
      HAS                                  │
 NO ── LIMITED TIME                        │
      PASSED?                              │
            │ YES                          │
            ▼                              ▼
  ┌──────────────────┐ S79    S74  ┌──────────────────┐
  │  AUTHENTICATION  │            │  AUTHENTICATION  │
  │ FAILURE IS       │            │ SUCCESS IS       │
  │ OUTPUTTED        │            │ OUTPUTTED        │
  └──────────────────┘            └──────────────────┘
            │                              │
            ▼◄─────────────────────────────┘
   ( PROCESSING IS FINISHED )
```

FIG. 7

FIG. 8

FIG. 9

FIG. 10

PROCESSING IS STARTED

IMAGE IS CAPTURED
(FIRST IMAGE DATA) — S111

IS
AUTHENTICATION
ACHIEVED? — S112    YES

NO

IMAGE IS CAPTURED
(SECOND IMAGE DATA) — S114

IS
AUTHENTICATION
ACHIEVED? — S115    YES

NO

NO    HAS
LIMITED TIME
PASSED? — S116

YES

AUTHENTICATION
FAILURE IS OUTPUTTED — S117

AUTHENTICATION
SUCCESS IS
OUTPUTTED — S113

PROCESSING IS FINISHED

FIG. 11

FIG. 12

UPPER
REGION

LOWER
REGION

FIG. 13

PROCESSING IS STARTED

IMAGE IS CAPTURED — S141

IRIS IMAGE IS CLIPPED — S142

IS
AUTHENTICATION
ACHIEVED? — S143

YES

NO

HAS
LIMITED TIME
PASSED? — S145

NO

YES

AUTHENTICATION
FAILURE IS OUTPUTTED — S146

AUTHENTICATION
SUCCESS IS OUTPUTTED — S144

PROCESSING IS FINISHED

FIG. 14

EP 1 696 382 A1

**FIG. 15**

L

18

111  14  112

12

17

L

15

115

IMAGE PROCESSING SECTION

113  114  110  13

100

SWITCHING SECTION  16

60

61  IMAGE CAPTURE SECTION

68  67  66

LEAD GUIDANCE SECTION

OBJECT DISTANCE DETERMINATION SECTION

FOCUSING DETERMINATION SECTION

7

SWITCHING CONTROL SECTION

IRIS AUTHENTICATION PROCESSING SECTION

IRIS DATABASE

65  62  63

AUTHENTICATION RESULT OUTPUT SECTION  64

FIG. 16

FIG. 17

FIG. 18

**FIG. 19**

FIG. 20

FIG. 21

FIG. 22

```
                    ┌─────────────────┐
                    │ PROCESSING IS   │
                    │    STARTED      │
                    └─────────────────┘
                            │
   ┌────────────────────────┼
   │                        ▼
   │            ┌──────────────────────────────┐
   │            │ FOCUSING LEVEL CALCULATION AND│
   │            │ FOCUSING DETERMINATION ARE    │── S231
   │            │ PERFORMED                     │
   │            │ (FIRST IMAGE DATA)            │
   │            └──────────────────────────────┘
   │                        │
   │                        ▼
   │                   ╱─────────╲  S232
   │                  ╱    IS      ╲
   │                 ╱ IRIS WITHIN  ╲
   │                 ╲ FOCUSING     ╱────────── YES ──────────┐
   │                  ╲  RANGE?    ╱                          │
   │                   ╲─────────╱                            │
   │                      NO │                                ▼
   │                        ▼                    ┌──────────────────────┐
   │            ┌──────────────────────────────┐ │  FIRST IMAGE DATA     │
   │            │ FOCUSING LEVEL CALCULATION AND│ │  ARE SELECTED         │
   │            │ FOCUSING DETERMINATION ARE    │─┐└──────────────────────┘
   │            │ PERFORMED                     │ │         │   S233
   │            │ (SECOND IMAGE DATA)           │ S234     │
   │            └──────────────────────────────┘          │
   │     S235              │                               │
   │          ╲           ▼                                │
   │           ╲     ╱─────────╲                           │
   │            ╲   ╱    IS      ╲   YES                    │
   │            ╱ IRIS WITHIN     ╲──────┐                  │
   │            ╲ FOCUSING        ╱      │    S236          │
   │             ╲  RANGE?       ╱       ▼                  │
   │              ╲─────────────╱   ┌──────────────────┐    │
   │   S237           NO │          │ SECOND IMAGE DATA│    │
   │       ╲            ▼           │  ARE SELECTED    │    │
   │        ┌──────────────────┐    └──────────────────┘    │
   │        │ OBJECT DISTANCE  │           │                │
   │        │ IS DETERMINED    │           │◄───────────────┘
   │        └──────────────────┘           │
   │                  │                     ▼
   │   S238           ▼          ┌──────────────────┐
   │       ╲     ╱─────────╲     │  IMAGE IS        │── S242
   │        ╲   ╱   IS       ╲   │  CAPTURED        │
   │      ╱ OBJECT IN DISTANT ╲  └──────────────────┘
   │ YES  ╲   POSITION?       ╱           │
   │ ◄────┐╲────────────────╱            ▼
   │      │      NO │  S239     ┌──────────────────┐
   │ S240 │        ▼            │ AUTHENTICATION   │
   │      ▼   ┌──────────────┐  │ PROCESSING IS    │
   │ ┌──────────┐│ OBJECT IS  │ │ PERFORMED        │
   │ │OBJECT IS ││ LED TO BE  │ └──────────────────┘
   │ │LED TO BE ││ DISTANCED  │       S243│
   │ │CLOSER    │└──────────────┘         │
   │ └──────────┘     │                   │
   │         │       ▼                    │
   │   NO    ╱─────────────╲  S241        │
   └─────────╲ HAS LIMITED  ╱             │
             ╲ TIME PASSED? ╱             │
              ╲────────────╱              │
                  YES │                   │
                      ▼◄──────────────────┘
              ┌─────────────────┐
              │ PROCESSING IS   │
              │   FINISHED      │
              └─────────────────┘
```

**FIG. 23**

50

FIG. 24

FIG. 25

PROCESSING IS
STARTED

IMAGE IS CAPTURED — S261

FOCUSING LEVEL CALCULATION
AND FOCUSING DETERMINATION
ARE PERFORMED — S262

OBJECT DISTANCE
IS DETERMINED — S263

IS
IRIS WITHIN EXPANDED
FOCUSING RANGE? — S264

YES

NO

IS
OBJECT IN DISTANT
POSITION? — S265

YES

NO

AUTHENTICATION
PROCESSING IS
PERFORMED

S267

OBJECT IS LED TO
BE CLOSER

OBJECT IS LED TO
BE DISTANCED — S266

S269

HAS
LIMITED TIME
PASSED? — S268

NO

YES

PROCESSING IS
FINISHED

FIG. 26

## INTERNATIONAL SEARCH REPORT

| | International application No. |
|---|---|
| | PCT/JP2004/018951 |

**A. CLASSIFICATION OF SUBJECT MATTER**
Int.Cl⁷ G06T1/00

According to International Patent Classification (IPC) or to both national classification and IPC

**B. FIELDS SEARCHED**

Minimum documentation searched (classification system followed by classification symbols)
Int.Cl⁷ G06T1/00

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2005 |
| Kokai Jitsuyo Shinan Koho | 1971–2005 | Jitsuyo Shinan Toroku Koho | 1996–2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2001-227914 A  (Matsushita Electric Industrial Co., Ltd.),<br>24 August, 2001 (24.08.01),<br>Full text; all drawings<br>& US 2001/0015763 A    & EP 1128666 A2 | 9<br>1-8,10-13 |
| Y | JP 2000-259817 A  (Oki Electric Industry Co., Ltd.),<br>22 September, 2000 (22.09.00),<br>Full text; all drawings<br>(Family: none) | 1-8,11-13 |
| Y | JP 2001-257928 A  (Kabushiki Kaisha Tekunosonikku),<br>21 September, 2001 (21.09.01),<br>Full text; Fig. 8<br>(Family: none) | 1-8,10 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>11 March, 2005 (11.03.05) | Date of mailing of the international search report<br>29 March, 2005 (29.03.05) |
|---|---|
| Name and mailing address of the ISA/<br>Japanese Patent Office | Authorized officer |
| Facsimile No. | Telephone No. |

Form PCT/ISA/210 (second sheet) (January 2004)